(19) Europäisches Patentamt
European Patent Office
Office européen des brevets

(11) **EP 1 683 838 A1**

(12) **EUROPEAN PATENT APPLICATION**
published in accordance with Art. 158(3) EPC

(43) Date of publication:
26.07.2006 Bulletin 2006/30

(51) Int Cl.:
*C08L 59/00* (2006.01)    *C08K 5/25* (2006.01)
*C08K 5/092* (2006.01)    *A61L 9/01* (2006.01)
*B01J 20/22* (2006.01)    *C09K 3/00* (2006.01)

(21) Application number: 04792841.1

(22) Date of filing: 22.10.2004

(86) International application number:
PCT/JP2004/015699

(87) International publication number:
WO 2005/044916 (19.05.2005 Gazette 2005/20)

(84) Designated Contracting States:
AT BE BG CH CY CZ DE DK EE ES FI FR GB GR
HU IE IT LI LU MC NL PL PT RO SE SI SK TR

(30) Priority: 10.11.2003 JP 2003380187

(71) Applicant: Polyplastics Co., Ltd.
Tokyo 108-8280 (JP)

(72) Inventor: Harashina, Hatsuhiko,
Polyplastics Co., Ltd.
Shizuoka 4168533 (JP)

(74) Representative: Peel, James Peter
Barker Brettell,
10-12 Priests Bridge
London SW15 5JE (GB)

(54) **ALDEHYDE INHIBITOR COMPOSITION AND POLYACETAL RESIN COMPOSITION**

(57) An aldehyde-inhibiting composition inhibiting an aldehyde from an aldehyde-generating source comprises a carboxylic acid hydrazide and a metal salt of a hydroxy polycarboxylic acid (e.g., a salt of citric acid, malic acid, or tartaric acid with an alkaline earth metal) in a proportion of 0.01 to 100 parts by weight relative to 1 part by weight of the carboxylic acidhydrazide. Moreover, a polyacetal resin composition may comprise a polyacetal resin and the aldehyde-inhibiting composition in a proportion of 0.001 to 20 parts by weight of the aldehyde-inhibiting composition relative to 100 parts by weight of the polyacetal resin. To the resin composition, may be added an antioxidant, a heat stabilizer, a processing stabilizer, a weather (light)-resistant stabilizer, an impact resistance improver, a gloss control agent, a sliding improver, a coloring agent, a filler, and others. A small amount of the aldehyde-inhibiting composition efficiently inhibits the aldehyde generation from the polyacetal resin without discoloring the resin.

**Description**

TECHNICAL FIELD

The present invention relates to an aldehyde-inhibiting composition which efficiently reduces or inhibits generation (emission) of an aldehyde compound from an aldehyde-generating source; to a polyacetal resin composition which contains the aldehyde-inhibiting composition; and to a process for producing the same; as well as to a molded product (shaped or molded article) formed from the polyacetal resin composition.

BACKGROUND ART

In recent years, an aldehyde compound such as formaldehyde, acetaldehyde and acrolein (acraldehyde) has been noted as one of the factors which adversely affect environment or health. So far, these aldehyde compounds are used as a raw material of an adhesive or a resin (e.g., a phenolic resin, a melamine resin, a urea resin, a furan resin, a xylene resin, and a polyacetal resin), an antiseptic agent, and others. Moreover, there has been known that oxidation of a polyester resin (e.g., a polyethylene terephthalate, and a polypropylene terephthalate) generates acetaldehyde or acrolein which are an oxide of a polymerizable monomer being a raw material. Accordingly, there is a concern that emission and diffusion of an aldehyde compound from manufactured products, or elution of an aldehyde compound to a liquid material which is in contact with manufactured products pollutes circumferential environment. In particular, degradation or decomposition of the products due to oxidation or heating causes more generation of aldehyde compounds.

As an inhibitor for inhibiting generation of such an aldehyde compound, there have been known the effectiveness of a basic nitrogen-containing compound (such as a urea compound, an aminotriazine compound, a hydrazide compound, or a polyamide). Among these conventionally used inhibitors, it is known that a hydrazide compound (particularly, a carboxylic acid hydrazide) has a high ability to inhibit an aldehyde compound generation. For example, Japanese Patent Application Laid-Open No. 36681/1998 (JP-10-36681A) (Patent Document 1) discloses that a deodorizing composition containing a synthetic resin and a hydrazide compound (e.g., a monohydrazide compound, a dihydrazide compound, and a polyacrylic acid hydrazide) has a remarkable deodorizing effect on an aldehyde compound such as acetaldehyde or formaldehyde, and that the deodorizing effect thereof sustains for a long period. Moreover, Japanese Patent Application Laid-Open No. 345648/1992 (JP-4-345648A) (Patent Document 2) discloses that a combination of a hydrazide compound such as a monocarboxylic acid hydrazide, a dicarboxylic acid hydrazide, or a polyacrylic acid polyhydrazide with a polyacetal resin can reduce formaldehyde odor from the polyacetal resin composition.

However, a carboxylic acid hydrazide has an ability for suppressing or inhibiting generation of an aldehyde compound in certain degree, as drawing an attention to dangerous of the aldehyde compound, it is required to inhibit generation of the aldehyde compound to further higher level. Moreover, the carboxylic acid hydrazide sometimes causes discoloration of the resin under heating action or coexistence with other chemical substances, and deteriorates production quality or appearance.

[Patent Document 1] JP-10-36681 (Claim 1, Paragraph Nos. [0011], [0017], and [0024])
[Patent Document 2] JP-4-345648 (Claim 1, Paragraph Nos. [0001], and [0009] to [0012])

DISCLOSURE OF THE INVENTION

PROBLEMS TO BE SOLVED BY THE INVENTION

It is therefore an object of the present invention to provide an aldehyde-inhibiting composition which can efficiently inhibit or suppress generation of an aldehyde (an aldehyde compound) from an aldehyde-generating source by enhancing an aldehyde-trapping performance of a carboxylic acid hydrazide.

It is another object of the present invention to provide a polyacetal resin composition which can drastically inhibit a formaldehyde generation from a polyacetal resin or a molded (shaped) product thereof without discoloring the resin or the product, a process for producing the resin composition, and a molded product formed from the resin composition.

It is still another object of the present invention to provide an aldehyde-inhibiting composition capable of efficiently inhibiting an aldehyde generation from a polyacetal resin even in a small amount, and a polyacetal resin composition.

It is a further object of the present invention to provide a polyacetal resin molded product in which discoloration and formaldehyde generation is suppressed or restrained.

Another object of the present invention is to provide a polyacetal resin composition in which an amount of formaldehyde emission from a polyacetal resin and a molded product therefrom is inhibited to a significantly low level, and physical property such as weather (light)-resistant stability, impact resistance, (low) gloss property or sliding property is improved; and an product as molded (or shaped) therefrom.

MEANS TO SOLVE THE PROBLEMS

The inventor of the present invention made intensive studies and searches on a series of inhibitor auxiliaries regarding a carboxylic acid hydrazide being an aldehyde inhibitor to achieve the above objects and finally found that a metal salt of a hydroxy polycarboxylic acid significantly improves an aldehyde-inhibiting performance of a carboxylic acid hydrazide without discoloration of a resin caused by the carboxylic acid hydrazide, and that blend of an aldehyde-inhibiting composition containing a carboxylic acid hydrazide and a metal salt of a hydroxy polycarboxylic acid to a polyacetal resin ensures to drastically inhibit formaldehyde generation from a molded product of the polyacetal resin. The present invention was accomplished based on the above findings.

That is, the aldehyde-inhibiting composition of the present invention is an aldehyde-inhibiting composition which inhibits an aldehyde (aldehyde generation) from an aldehyde-generating source, and comprises a carboxylic acid hydrazide and a metal salt of a hydroxy polycarboxylic acid. The carboxylic acid hydrazide may comprise a hydrocarbon-series carboxylic acid hydrazide (an aliphatic carboxylic acid hydrazide, an alicyclic carboxylic acid hydrazide, an aromatic carboxylic acid hydrazide, a dimer or trimer acid hydrazide), a hydrazide of a carboxylic acid having a hetero atom-containing group, and a polymeric carboxylic acid hydrazide (a hydrazide of a polymeric acid having a carboxyl group), and others. The metal salt of the hydroxy polycarboxylic acid may comprise a salt of a hydroxy aliphatic polycarboxylic acid (a hydroxy $C_{3-22}$ aliphatic di- to tetracarboxylic acid such as citric acid, malic acid, or tartaric acid) with at least one metal selected from the group consisting of an alkali metal, an alkaline earth metal (e.g., Mg, and Ca), a metal of Group 3A, a metal of Group 4A, a metal of Group 5A, a metal of Group 6A, a metal of Group 7A, a metal of Group 8, a metal of Group 1B, a metal of Group 2B, a metal of Group 3B, and a metal of Group 4B of Periodic Table of the Elements. In the aldehyde-inhibiting composition, the proportion of the metal salt of the hydroxy polycarboxylic acid may be about 0.01 to 100 parts by weight relative to 1 part by weight of the carboxylic acidhydrazide. Moreover, the aldehyde-inhibiting composition may comprise at least one member selected from the group consisting of an adsorbent (an adsorbing agent) and a resin. The aldehyde-inhibiting composition may comprise an aldehyde-inhibiting component at least containing the carboxylic acid hydrazide and the metal salt of the hydroxy polycarboxylic acid, and the inhibiting component may be held (or carried) on or supported by a substrate.

The present invention encompasses a polyacetal resin composition which comprises a polyacetal resin and the aldehyde-inhibiting composition, and a molded product formed from the resin composition. In the resin composition, a pellet of the polyacetal resin may be at least coexistent with the aldehyde-inhibiting composition or a master batch containing the aldehyde-inhibiting composition. The resin composition may further comprises at least one member selected from the group consisting of an antioxidant, a heat stabilizer, a processing stabilizer, a weather (light)-resistant stabilizer, an impact resistance improver, a gloss control agent, a sliding improver (an agent for improving a sliding property), a coloring agent, and a filler. The molded product may be an automotive part, an electric or electronic device part, an architectural or pipeline part (an architectural and/or pipeline part), a household utensil or cosmetic article part (a household utensil and/or cosmetic article part, or a medical device part.

The present invention also includes a process for producing a polyacetal resin composition, which comprises melt-mixing a polyacetal resin and the aldehyde-inhibiting composition with an extruder, wherein (a) at least a carboxylic acid hydrazide is fed to the extruder through a side feed port and mixed with the polyacetal resin, and (b) the average retention time in the extruder is not longer than 300 seconds.

EFFECTS OF THE INVENTION

In the aldehyde-inhibiting composition of the present invention, combination use of a carboxylic acid hydrazide with a metal salt of a hydroxy polycarboxylic acid improves the aldehyde-trapping performance of the carboxylic acid hydrazide. The aldehyde-inhibiting composition efficiently inhibits or suppresses aldehyde generation from an aldehyde-generating source by disposing the composition close to the aldehyde-generating or release source or by mixing the composition close with the aldehyde-generating source, and the aldehyde-inhibiting composition greatly improves the circumferential environment (e.g., working and living or using environments). Moreover, in the polyacetal resin composition comprising the aldehyde-inhibiting composition, since the aldehyde-inhibiting composition has the specific combination of the components, even if a resin composition containing the carboxylic acid hydrazide is processed under a high temperature which is accompanied with extruding process and/or molding process, a polyacetal resin or a molded product (shaped article) thereof is prevented from discoloration. Accordingly, the quality of the molded product is improved, and the formaldehyde generation from the resin or the molded product is inhibited at an extremely low level. Further, since the aldehyde-trapping or capturing performance of the carboxylic acid hydrazide is significantly enhanced by using the specific aldehyde-inhibiting composition a metal salt of a hydroxy polycarboxylic acid, even a small amount of the aldehyde-inhibiting composition can efficiently reduce or suppress the aldehyde generation from the polyacetal resin.

Moreover, addition of other additive(s) (e.g., a weather (light)-resistant stabilizer, an impact resistance improver, a gloss control agent, a sliding improver, a coloring agent, and a filler) ensures to inhibit the amount of formaldehyde generation from the polyacetal resin and a molded product thereof at an extremely low level, and further ensures to provide a polyacetal resin composition and a molded product thereof which improve in physical properties such as weather (light)-resistant stability, impact resistance, (low) gloss property, and sliding property.

DETAILED DESCRIPTION OF THE INVENTION

[Aldehyde-inhibiting composition]

The aldehyde-inhibiting composition of the present invention comprises a carboxylic acid hydrazide and a metal salt of a hydroxy polycarboxylic acid.

(Carboxylic acid hydrazide)

The carboxylic acid hydrazide may have at least one hydrazinocarbonyl group [$-C(=O)NHNH_2$] in a molecule thereof, and various carboxylic acid hydrazides can be employed.

A Carboxylic acid constituting the carboxylic acid hydrazide may be a monocarboxylic acid or a polycarboxylic acid such as a dicarboxylic acid, a tricarboxylic acid, or tetracarboxylic acid. The number of hydrazinocarbonyl groups in the carboxylic acid hydrazide is not particularly limited to a specific one, and at least a part of carboxyl group(s) corresponding to the carboxylic acid may be hydrazidated, and all of the carboxyl group(s) may be hydrazidated. For example, polycarboxylic acid hydrazides may be a mono- or polyhydrazide of a polycarboxylic acid (e.g., a mono- or dihydrazide of a dicarboxylic acid, and a mono- to trihydrazide of a tricarboxylic acid).

The carboxylic acid hydrazide may be any of a hydrocarbon-series carboxylic acid hydrazide (e.g., an aliphatic carboxylic acid hydrazide, an alicyclic carboxylic acid hydrazide, an aromatic carboxylic acid hydrazide, and a dimer acid or trimer acid hydrazide), a hydrazide of a carboxylic acid having a hetero atom-containing group, and a polymeric carboxylic acid hydrazide (e.g., a polymeric acid hydrazide having a carboxyl group). The carboxylic acid having a hetero atom-containing group may contain at least one member selected from the group consisting of nitrogen, oxygen, and sulfur atoms, as the hetero atom. The hetero atom-containing group may be either a chain group or a cyclic group.

Among the hydrocarbon-series carboxylic acid hydrazides, as the aliphatic carboxylic acid hydrazide, there may be mentioned, for example, a monocarboxylic acid hydrazide [e.g., a monohydrazide of a saturated or unsaturated $C_{2-40}$aliphatic monocarboxylic acid which may have a substituent (e.g., hydroxyl group) such as lauric acid, stearic acid, 12-hydroxystearic acid, or linoleic acid], a polycarboxylic acid hydrazide [e.g., a mono- or polyhydrazide of an aliphatic polycarboxylic acid, for example, a mono- or dihydrazide of a saturated $C_{2-40}$aliphatic dicarboxylic acid (e.g.,oxalic acid, malonic acid, succinic acid, glutaric acid, adipic acid, pimelic acid, suberic acid, azelaic acid, sebacic acid, dodecanedioic acid, hexadecanedioic acid, and eicosanedioic acid), and a mono-or dihydrazide of an unsaturated $C_{4-40}$aliphatic dicarboxylic acid (e.g., itaconic acid, sorbic acid, and 7,11-octadecadiene-1,18-dicarboxylic acid)], a hydrazide of a hydroxycarboxylic acid (e.g., a mono- or polyhydroxy$C_{4-20}$mono- or polycarboxylic acid such as lactic acid, D-, L-, or DL-malic acid, D-, L-, DL-, or meso tartaric acid, or citric acid), and others. Incidentally, the polycarboxylic acid hydrazide may include a polycarboxylic acid ester hydrazide, for example, a hydrazide of a dicarboxylic acid mono$C_{1-4}$alkyl ester, such as monomethyl adipate hydrazide, monomethyl sebacate hydrazide, or monomethyl dodecanedioate hydrazide. Moreover, in the polycarboxylic acid hydrazide, part of hydrazino group ($-NHNH_2$) may be subjected to hydrazonation. Such a hydrazide may include, for example, a monoketone hydrazone of a dicarboxylic acid dihydrazide (e.g., a monoacetone hydrazone of adipic acid dihydrazide), and others. Among these hydrocarbon-series carboxylic acid hydrazides, the preferred one includes an aliphatic carboxylic acid hydrazide having about 2 to 20 carbon atoms (e.g., a saturated $C_{2-20}$carboxylic acid hydrazide, an unsaturated $C_{4-20}$carboxylic acid hydrazide, and a hydroxy$C_{4-20}$polycarboxylic acid hydrazide).

The alicyclic carboxylic acid hydrazide may include a monocarboxylic acid hydrazide (e.g., a hydrazide of a saturated or unsaturated $C_{5-8}$alicyclic monocarboxylic acid such as cyclohexanecarboxylic acid, or cyclohexenecarboxylic acid), a polycarboxylic acid hydrazide (e.g., a mono- or polyhydrazide of a saturated or unsaturated $C_{5-8}$alicyclic polycarboxylic acid such as 1,2-, 1,3- or 1,4-cyclohexanedicarboxylic acid, or cyclohexanetricarboxylic acid), and others. The alicyclic carboxylic acid hydrazides may have a substituent(s) on an alicyclic ring thereof.

The carboxylic acid hydrazide may include a monocarboxylic acid hydrazide [e.g., a hydrazide of a $C_{6-10}$arene-monocarboxylic acid which may have a substituent(s) on an aromatic ring thereof, exemplified by a hydrazide of benzoic acid and a hydrazide of α-, or β-naphthoic acid], a polycarboxylic acid hydrazide [e.g., a $C_{6-10}$arene-polycarboxylic acid mono- or polyhydrazide such as an isophthalic acid mono- or dihydrazide, a terephthalic acid mono- or dihydrazide, a 1,2,4-benzenetricarboxylic acid mono- to trihydrazide, a pyromellitic acid mono- to tetrahydrazide, a 1,4-, or 2,6-naphthalenedicarboxylic acid mono- or dihydrazide, or a mono- to tetrahydrazide of 1,4,5,8-naphthalenetetracarboxylic acid;

a mono- or polyhydrazide of a bis$C_{6-10}$arenepolycarboxylic acid, for example, a mono- or dihydrazide of a dicarboxylic acid such as a 3,3'-, 3,4'-, or 4,4'-biphenyldicarboxylic acid, a diphenyl ether dicarboxylic acid, a bis(carboxyphenyl) straight or branched chain $C_{1-4}$alkane (e.g., a diphenylmethanedicarboxylic acid, and diphenylethanedicarboxylic acid), a bis(carboxyphenoxy) straight or branched chain $C_{1-4}$alkane (e.g., diphenoxyethanedicarboxylic acid), diphenyl ketone dicarboxylic acid, diphenyl sulfone dicarboxylic acid; 4,4"-terphenyldicarboxylic acid, or 4,4'''-quarterphenyldicarboxylic acid], and others. Incidentally, the aromatic polycarboxylic acid hydrazide may also include an aromatic polycarboxylic acid ester hydrazide, for example, an aromatic dicarboxylic acid mono$C_{1-4}$alkyl ester monohydrazide such as isophthalic acid monomethyl ester hydrazide, 2,6-naphthalenedicarboxylic acid monomethyl ester hydrazide, or 4,4'-diphenyldicarboxylic acid monomethyl ester hydrazide.

These aromatic carboxylic acid hydrazides may have a substituent(s) on an aromatic ring thereof. As the concrete examples of the aromatic carboxylic acid hydrazide having a substituent(s), there may be mentioned, for example, a hydrazide of a substituted benzoic acid (e.g., o-, m-, or p-methylbenzoic acid, 2,4-, 3,4-, 3,5-, or 2,5-dimethylbenzoic acid, 4-hydroxy-3,5-dimethylbenzoic acid, 4-hydroxy-3,5-di-t-butylbenzoic acid, 4-hydroxy-3-phenylbenzoic acid, 4-acetoxy-3-phenylbenzoic acid, 4-phenylbenzoic acid, 4-(4'-biphenyl)benzoic acid, o-, m-, or p-hydroxybenzoic acid, and o-, m-, or p-acetoxybenzoic acid), a substituted $\alpha$-, or $\beta$-naphthoic acid hydrazide (e.g., 3-hydroxy-2-naphthoic acid hydrazide, and 6-hydroxy-2-naphthoic acid hydrazide), and others.

The dimer or trimer acid hydrazide may include a chain saturated or unsaturated dimer or trimer acid hydrazide, exemplified by a chain saturated (or hydrogenated) dimer or trimer acid hydrazide (e.g., a chain saturated (or hydrogenated) linoleic dimer acid mono- or dihydrazide), and a chain unsaturated dimer or trimer acid hydrazide (e.g., a chain linolenic dimer acid mono- or dihydrazide); a cyclic saturated or unsaturated dimer or trimer acid hydrazide, exemplified by a cyclic saturated (or hydrogenated) dimer or trimer acid hydrazide (e.g., a cyclic saturated (or hydrogenated) linoleic dimer acid mono- or dihydrazide), a cyclic unsaturated dimer or trimer acid hydrazide (e.g., a mono- or dihydrazide of a cyclic unsaturated linoleic dimer acid, a cyclic unsaturated oleic dimer acid, or a cyclic unsaturated linolenic dimer acid), and others. As the dimer or trimer acid hydrazide, there may be used a saturated or unsaturated chain $C_{20-60}$dimer acid hydrazide (e.g., a chain $C_{20-40}$dimer acid mono- or dihydrazide), a saturated or unsaturated chain $C_{20-60}$trimer acid hydrazide (e.g., a chain $C_{30-60}$trimer acid mono- to trihydrazide), a saturated or unsaturated cyclic $C_{20-60}$dimer acid hydrazide (e.g. , a cyclic $C_{20-40}$dimer acid mono- or dihydrazide), a saturated or unsaturated cyclic $C_{20-60}$trimer acid hydrazide (e.g., a cyclic $C_{30-60}$trimer acid mono- to trihydrazide), and the like.

Among the hydrazides of a carboxylic acid having a hetero atom-containing group, a hydrazide of a chain carboxylic acid (a mono- or polycarboxylic acid hydrazide) having a nitrogen-containing group may include, for example, an amino acid hydrazide (an $\alpha$-, $\beta$-, $\gamma$-, or $\delta$-amino acid, for example, a hydrazide of tyrosine, histidine, or tryptophan), an iminodiacetic acid mono- or dihydrazide, a nitrilotriacetic acid mono- to trihydrazide, an ethylenediaminetetraacetic acid mono- to tetrahydrazide, a 2,6-pyridinedicarboxylic acid mono- or dihydrazide, an aliphatic carboxylic acid hydrazide having a 5- to 8-membered mono- to triazacycloalkane group (e.g., a mono- to trihydrazide of an aliphatic carboxylic acid having an isocyanuric ring such as 1,3,5-tris(2-carboxyethyl) isocyanurate or 1,3,5-tris(3-carboxypropyl) isocyanurate), an aliphatic carboxylic acid hydrazide having a cyclic urea group (including a cyclic ureide group) (e.g., an aliphatic carboxylic acid hydrazide having a hydantoin ring, for example, 1,3-bis(hydrazinocarbonylethyl)-5-isopropylhydantoin), and in addition, carboxylic acid hydrazides described in US Patent No. 4465830, US Patent No. 4544733, Japanese Patent Laid-Open No.193753/1991 (JP-3-193753A), Japanese Patent Laid-Open No. 131953/1983 (JP-58-131953A), Japanese Patent Laid-Open No. 24714/1984 (JP-59-24714A), Japanese Patent Laid-Open No. 67256/1984 (JP-59-67256A), Japanese Patent Laid-Open No. 178851/1985 (JP-60-178851A), and Japanese Patent Laid-Open No. 183316/1986 (JP-61-183316A). Incidentally, among these carboxylic acid hydrazides, a carboxylic acid hydrazide having an asymmetric carbon atom (e.g., an amino acid hydrazide) may be in L-, D-, or DL-form. These carboxylic acid hydrazides may have, for example, a substituent(s) on the above-mentioned hetrocycle.

Among the carboxylic acid hydrazides having a hetero atom-containing group, a carboxylic acid hydrazide having an oxygen atom-containing group (a mono- or polycarboxylic acid hydrazide) may include an aliphatic carboxylic acid hydrazide having a cyclic ether group. The aliphatic carboxylic acid hydrazide may have a substituent(s) on a cyclic ether group thereof. Such a carboxylic acid hydrazide may include, for example, a dioxane ring-containing carboxylic acid hydrazide[e.g., hydrazide of 5-methylol-5-ethyl-2-(1,1-dimethyl-2-carboxyethyl)-1,3- dioxane], a tetraoxospiro ring-containing carboxylic acid hydrazide (e.g., a mono- or dihydrazide of a dicarboxylic acid such as 3,9-bis(2-carboxyethyl)-2,4,8,10-tetraoxaspiro[5.5]und ecane, 3,9-bis(2-carboxymethoxyethyl)-2,4,8,10-tetraoxaspiro[ 5.5]undecane, 3,9-bis(2-carbomethoxyethyl)-2,4,8,10-tetraoxaspio[5. 5]undecane, 3,9-bis(1,1-dimethyl-1-carboxymethyl)-2,4,8,10-tetraoxaspiro[5.5]undecane, 3,9-bis(1,1-dimethyl-1-carboxymethoxymethyl)-2,4,8,10-tetraoxaspiro[5.5]undec ane), and 3,9-bis(1,1-dimethyl-1-carbomethoxymethyl)-2,4,8,10-tetraoxaspiro[5.5]undecan e).

As the polymeric carboxylic acid hydrazide, there may be exemplified a homo- or copolymer of a poly(meth)acrylic acid hydrazide, (e.g., polymers described in Japanese Patent Laid-Open No. 142496/1978 (JP-53-142496A), Japanese Patent Laid-Open No. 21493/1979 (JP-54-21493A), Japanese Patent Laid-Open No. 43254/1979 (JP-54-43254A), Japanese Patent Laid-Open No. 2306/1981 (JP-56-2306A), Japanese Patent Laid-Open No. 69232/1983 (JP-58-69232A), and Japanese Patent Laid-Open No. 49300/1988 (JP-63-49300A), and a commercial item "Aminopolyacrylamide APA series" manufactured by Otsuka Chemical Co., Ltd.], and others.

These carboxylic acid hydrazides may be used singly or in combination.

Among the carboxylic acid hydrazides, the preferred one is a hydrocarbon-series carboxylic acid hydrazide, particularly, an aliphatic carboxylic acid hydrazide (e. g. , an aliphatic carboxylic acid hydrazide having about 2 to 16 carbon atoms), and an aromatic carboxylic acid hydrazide.

Incidentally, as described above, the carboxylic acid hydrazide may have a substituent(s). Such a substituent may include, for example, a straight or branched chain alkyl group (e.g., methyl and ethyl groups), a hydroxyalkyl group (e.g., methylol and ethylol groups), a phenyl group, a cumyl group, a hydroxyphenyl group, a hydroxy group, an alkoxy group (e.g., methoxy and ethoxy groups), a carboxyl group, an alkoxycarbonyl group (e.g. , a methoxycarbonyl group), an acyl group (e.g., an acetyl group), an acyloxy group (e.g., an acetoxy group), a carbamoyl group or N-substituted carbamoyl group, an amino group or N-substituted amino group (e.g., an acetoamino group), a nitrile group, and others. The site of the substituent to substituted is not particularly limited to a specific one, and as already stated, the substituent (s) may usually be located on a hydrocarbon group (e.g., an aliphatic group, an alicyclic ring, and an aromatic ring) bonded to a hydrazinocarbonyl group, or a hetero atom-containing group bonded to a hydrazinocarbonyl group. The number of substituents is not particularly limited to a specific one, and may be about 1 to 5, preferably 1 to 4, and more preferably about 1 to 3.

The molecular weight of the carboxylic acid hydrazide is not particularly limited to a specific one, and can be selected from a wide range of about 50 to 3000000. The carboxylic acid hydrazide may be, for example, any of a low-molecular weight compound having a molecular weight of about 60 to 300, amiddle-molecularweight compound having a molecular weight of about 300 to 1000, a high-molecular weight compound having a molecular weight of about 1000 to 3000, and a polymer having an average number molecular weight of about 300 to 3000000.

(Metal salt of hydroxy polycarboxylic acid)

As a hydroxy polycarboxylic acid forming the metal salt of the hydroxy polycarboxylic acid, there may be mentioned a polycarboxylic acid (e.g.,a dicarboxylic acid, a tricarboxylic acid, and a tetracarboxylic acid) having at least one hydroxyl group, and the like. In the hydroxy polycarboxylic acid, the number of hydroxyl groups is not particularly limited to a specific one, and may be, for example, 1 to 4, preferably 1 to 3, and more preferably 1 or 2.

Such a hydroxy polycarboxylic acid may include a hydroxy aliphatic polycarboxylic acid, a hydroxy alicyclic polycarboxylic acid (e.g., a hydroxy $C_{5-8}$cycloalkane-di-or tricarboxylic acid such as 1,4-dicarboxy-2-hexanol), a hydroxy aromatic polycarboxylic acid (e.g., a hydroxy $C_{6-10}$arene-di- to tetracarboxylic acid such as hydroxy benzenedicarboxylic acid), and others.

As the hydroxyaliphatic polycarboxylic acid, particularly preferred one includes a hydroxyaliphatic polycarboxylic acid (e.g., a hydroxy$C_{3-22}$aliphatic di- to tetracarboxylic acid) such as tartronic acid, malic acid, tartaric acid, citric acid, or hydroxyhexadecanedioic acid. Incidentally, a hydroxy polycarboxylic acid having an asymmetric center in a molecule thereof may be in any form of D-, L-, or DL-form, or may be in meso-form.

These hydroxy polycarboxylic acids may form, singly or in combination, a metal salt with a metal. Among these compounds, a mono to dihydroxy$C_{3-10}$aliphatic di- or tricarboxylic acid (such as D-, L-, DL- or meso formed tartaric acid, D-, L-, or DL-formed malic acid, or citric acid) is particularly preferred.

Metals forming the metal salt may include, for example, an alkali metal (e.g., K, and Na), an alkaline earth metal (e.g., Mg, Ca, and Ba), and metals of Group 3A (e.g., Y), Group 4A (e.g. , Ti), Group 5A (e.g. , V), Group 6A (e.g., Cr), Group 7A (e.g., Mn), Group 8 (e.g., Fe, Ru, Co, Ni, and Pd), Group 1B (e.g., Cu), Group 2B (e.g., Zn), Group 3B (e.g., Al), and Group 4B (e.g., Sn, and Pb) of Periodic Table of the Elements. The valence of the metal is not particularly limited to a specific one, and may be, for example, 1 to 4 valences, preferably 2 to 4 valences, and more preferably 2 or 3 valences.

Among these metals, it is preferred to use alkali metals, alkaline earth metals, and metals of Group 2B, Group 3B, Group 4B, and Group 8 of Periodic Table of the Elements (particularly alkaline earth metals such as Mg or Ca).

The single metal may form a salt with a hydroxy polycarboxylic acid, or a plurality of the metals in combination may form a double or complexed salt with a hydroxy polycarboxylic acid.

The hydroxy polycarboxylic acid and the metal metal salt may suitably combined to form the metal salt. Incidentally, the metal salt may be a normal salt, or a hydrogen salt which is a partial metal salt. Moreover, the metal salt may be either a hydrate salt (hydrate salt) or an anhydrous salt. The concrete examples of the metal salt may include, for example, an alkaline earth metal salt of citric acid [e.g., magnesium citrate: $Mg_3(C_6H_5O_7)_2$, magnesium hydrogen citrate: $MgH(C_6H_5O_7)$, calcium citrate: $Ca_3(C_6H_5O_7)_2$, and calcium hydrogen citrate: $CaH(C_6H_5O_7)$], an alkaline earth metal salt of malic acid [e.g. , magnesium malate: $MgC_4H_4O_5$, calcium malate: $CaC_4H_4O_5$, and calcium hydrogen malate: $Ca(HC_4H_4O_5)_2$], an alkaline earth metal salt of tartaric acid [e.g., magnesium tartarate: $MgC_4H_4O_6$, magnesium hydrogen tartarate: $Mg(HC_4H_4O_6)_2$, calcium tartarate: $CaC_4H_4O_6$, and a calcium hydrogen tartarate such as $Ca(HC_4H_4O_6)_2$, $CaH_6$

(C$_4$H$_4$O$_6$)$_4$] and the like.

Among the metal salts, for example, the preferred one includes a salt of an alkaline earth metal (particularly Ca) with a hydroxyC$_{3-6}$aliphatic di- or tricarboxylic acid (particularly citric acid). Further among these metal salts, calcium citrate (tricalcium citrate), and magnesium citrate are preferred. Moreover, the preferred metal salts also includes a hydrate salt, for example, a hydrate salt of calcium citrate or magnesium citrate (e.g. , tricalcium citrate trihydrate, and tricalcium citrate tetrahydrate; magnesium citrate nonahydrate, and magnesium citrate tetradecahydrate), and others.

These metal salts of a hydroxy polycarboxylic acids may be used singly or in combination.

In the aldehyde-inhibiting composition of the present invention, the proportion (weight ratio) of a metal salt of a hydroxy polycarboxylic acid may be about 0.001 to 100 parts by weight (e.g., about 0.003 to 50 parts by weight), preferably about 0.005 to 30 parts by weight, and more preferably about 0.01 to 10 parts by weight (e.g., about 0.01 to 5 parts by weight), and usually about 0.02 to 5 parts by weight (e.g., 0.02 to 2 parts by weight), relative to 1 part by weight of the carboxylic acid hydrazide.

The aldehyde-inhibiting composition of the present invention may further contain at least one member selected from the group consisting of an adsorbing agent and a resin. Moreover, in the aldehyde-inhibiting composition, an aldehyde-inhibiting component may be a held or supported on (or supported by) a substrate. The aldehyde-inhibiting composition of the present invention may encompass such a complex composition.

As the adsorbing agent (adsorbent), there may be mentioned, for example, a porous adsorbing agent such as a zeolite, a silica gel, an alumina, an activated carbon, or a sepiolite, a cyclodextrin, and others. The adsorbing agents may be used singly or in combination. In the aldehyde-inhibiting composition, an aldehyde-inhibiting component containing at least both the carboxylic acid hydrazide and the metal salt of the hydroxy polycarboxylic acid may be supported or held on the adsorbing agent, for example, by adsorbtion, intercalation, or clathration (inclusion).

The resin may include various synthetic resins such as a thermoplastic or thermosetting resin, for example, an olefinic resin (e.g. , a homopolymer such as a polyethylene, or a polypropylene, and in addition, a copolymer, for example, an ethylene-vinyl acetate copolymer, an ethylene-vinyl acetate-vinyl chloride copolymer, and an ethylene-vinyl acetate-acrylate copolymer), a halogen atom-containing resin (e.g., a polyvinyl chloride, and a poly(vinylidene chloride)), a vinyl-seriesresin (e.g., a polyvinyl acetate, and a polyvinyl alcohol), an acrylic resin (e.g., a homo-or copolymer of an acrylic monomer such as (meth)acrylic acid, or an alkyl (meth)acrylate), a styrenic resin (e.g., a homopolymer such as a polystyrene, and in addition, a copolymer, for example, an AS resin, an ABS resin, an AES resin, an SBR, an SBS resin, and an SEBS resin), a polyester (e.g., a homopolyester such asa polybutylene terephthalate, or a copolyester), a polycarbonate, a polyamide, a polyphenylene oxide, a polyphenylene sulfide, a polyurethane, an epoxy resin, and others. These resins may be used singly or in combination.

In the aldehyde-inhibiting composition, the aldehyde-inhibiting component may be mixed with the resin, or the aldehyde-inhibiting component may be supported or held on a fiber and/or particle comprising the resin.

The substrate may include a wood material (e.g., a natural wood, a laminated wood, and a decorative wood board), a paper, a fiber, a fabric (e.g., a woven fabric, or a nonwoven fabric), a ceramic, and others.

The aldehyde-inhibiting composition of the present invention can efficiently remove an aldehyde from an aldehyde atmosphere by disposing the composition close to an aldehyde-generatingsource (e.g., by contacting, coating, or packaging an aldehyde-generation source with the composition), and can reduce an aldehyde concentration in the atmosphere. Moreover, the aldehyde-inhibiting composition ensures to inhibit or eliminate an aldehyde generation from the aldehyde-generating source by blending the aldehyde-inhibiting composition to the aldehyde-generating source. Incidentally, the species of the aldehyde-generating source is not particularly limited to a specific one, and may include, for example, aldehyde-generating building materials, furniture, aldehyde odor-emitting components [e.g., a tobacco, and an aldehyde-generating resin (e.g., a phenolic resin, a urea resin, a melamine resin, a guanamine resin, a furan resin, a xylene resin, a polyacetal resin, and a polyester resin)], and others.

The aldehyde-inhibiting composition of the present invention can effectively inhibit or suppress formaldehyde generation (emission) from the polyacetal resin, particularly by blending the composition to the polyacetal resin.

[Polyacetal resin composition]

The polyacetal resin composition of the present invention comprises the aldehyde-inhibiting composition and a polyacetal resin.

(Polyacetal resin)

The polyacetal resin is a macromolecular compound containing oxymethylene group (-OCH$_2$-) as a predominant constituent unit and may include polyacetal homopolymers (e.g., trade name "Delrin", manufactured by DuPont, U.S.A.; trade name "Tenac 4010", manufactured by Asahi Kasei Corp. ; etc.) and polyacetal copolymers comprising an oxymethylene group and other comonomer unit (e.g., trade name "Duracon", manufactured by Polyplastics Co., Ltd.). Referring to such copolymers, the comonomer unit includes oxyalkylene units of about 2 to 6 carbon atoms (preferably about 2 to 4 carbon atoms), for example, oxyethylene ($-OCH_2CH_2-$), oxypropylene, and oxytetramethylene groups. The content of such comonomer unit may be small and, for example, can be selected from the range of about 0.01 to 20% by mol, preferably about 0.03 to 15% by mol (e.g., 0.05 to 10% by mol), and more preferably about 0.1 to 10% by mol, relative to the whole polyacetal resin (the whole monomer units constituting the polyacetal resin).

The polyacetal copolymer may be a copolymer containing two components, a terpolymer containing three components and so on. The polyacetal copolymer may be also a random copolymer, a block copolymer, or a graft copolymer. Moreover, the polyacetal resin may be linear or branched, and may have a crosslinked structure. In addition, the end (or terminal) groups of the polyacetal resin may have been stabilized, for example, by esterification with a carboxylic acid such as acetic acid or propionic acid, or an anhydride thereof. There is no particular limitation on the degree of polymerization, the degree of branching, or the degree of crosslinking of the polyacetal, provided it can be only melt-molded. There is no particular restriction as to the molecular weight of the polyacetal resin, and, for example, the weight average molecular weight may be about 5,000 to 500,000, and preferably about 10,000 to 400,000.

The polyacetal resin can be, for example, produced by polymerizing an aldehyde such as formaldehyde or paraformaldehyde; or a cyclic ether or cyclic formal such as trioxane, ethylene oxide, propylene oxide, 1,3-dioxolane, diethylene glycol formal, or 1,4-butanediol formal.

According to the present invention, addition of the aldehyde-inhibiting composition comprising a carboxylic acid hydrazide and a metal salt of a hydroxy polycarboxylic acid significantly inhibits formaldehyde generation from the polyacetal resin without discoloration of the polyacetal resin. Moreover, addition of a small amount of the aldehyde-inhibiting composition of the present invention to a polyacetal resin realizes stabilizing effects far superior to conventional stabilizers, and thus obtainedpolyacetal resin composition is excellent in extruding property (stability) and molding stability (discoloration stability).

In the polyacetal resin composition of the present invention, by using the specific aldehyde-inhibiting composition, even a small amount of the aldehyde-inhibiting composition can efficiently inhibit the aldehyde generation. In the polyacetal resin composition, the proportion of the aldehyde-inhibiting composition is not particularly limited to a specific one, and may be, for example, about 0.001 to 20 parts by weight, preferably about 0.002 to 10 parts by weight (e.g., about 0.003 to 3 parts by weight), and more preferably about 0. 005 to 2 parts by weight, relative to 100 parts by weight of the polyacetal resin. Too small amount of the aldehyde-inhibiting composition is difficult to efficiently reduce formaldehyde generation, and too large amount thereof has a possibility to deteriorate moldability or mechanical strength. Incidentally, the proportion of the carboxylic acid hydrazide may be, relative to 100 parts by weight of the polyacetal resin, for example, about 0. 0001 to 10 parts by weight, preferably about 0.001 to 5 parts by weight, and more preferably about 0.01 to 1 part by weight. Moreover, the proportion of the metal salt of the hydroxy polycarboxylic acid may be, relative to 100 parts by weight of the polyacetal resin, for example, about 0.0001 to 10 parts by weight, preferably about 0.001 to 5 parts by weight, and more preferably about 0.005 to 2 parts by weight (e.g. , about 0.01 to 1 part by weight).

In the polyacetal resin composition of the present invention, blend of the aldehyde-inhibiting composition to the polyacetal resin drastically inhibits or suppresses formaldehyde generation, and improves processing stability. Further, the polyacetal resin composition may comprise at least one member selected from the group consisting of an antioxidant (e.g., a hindered phenol compound, and a hindered amine compound), a processing stabilizer, a heat stabilizer, a weather (light)-resistant stabilizer, an impact resistance improver, a sliding improver, a coloring agent, and a filler. Incidentally, stabilizers (the antioxidant, the processing stabilizer, the heat stabilizer, and the weather (light)-resistant stabilizer) may be a compound which is free from (does not have) an ester bond [-C(=O)O-] as a structural unit in a molecule thereof.

(Antioxidant)

The antioxidant may include a hindered phenol compound, and a hindered amine compound, and others.

The hindered phenol compound may include a conventional phenol-series antioxidant or stabilizer, for example, a monocyclic hindered phenol compound (e.g., 2,6-di-t-butyl-p-cresol), a polycyclic hindered phenol compound in which rings are connected or bonded to each other through a hydrocarbon group or a group containing a sulfur atom [e.g., a $C_{1-10}$alkylene-bis to tetrakis(t-butylphenol) such as 2,2'-methylenebis(4-methyl-6-t-butylphenol), 4,4'-methylenebis(2,6-di-t-butylphenol) or 1,1,3-tris(2-methyl-4-hydroxy-5-t-butylphenyl)butane; a $C_{2-10}$alkenylene or dienylene-bis to tetrakis (t-butylphenol) such as 4,4'-butylidenebis(3-methyl-6-t-butylphenol); a $C_{6-20}$arylene or aralkylene-bis to tetrakis(t-butylphenol) such as 1,3,5-trimethyl-2,4,6-tris(3,5-di-t-butyl-4-hydroxybenzyl)benzene; and a bis(t-butylphenol) in which t-butylphenol groups are connected or bonded to each other through a group having a sulfur atom, for example, 4,4'-thiobis(3-methyl-6-t-butylphenol)], a hindered phenol compound having an ester group or an amide group [e.g., a t-butylphenol having a $C_{2-10}$alkylenecarbonyloxy group, exemplified by n-octadecyl-3-(4'-hydroxy-3',5'-dit-butylphenyl) propionate or n-octadecyl-2-(4'-hydroxy-3',5'-di-t-butylphenyl)propionate; a bis to tetrakis(t-butylphenol) in which t-butylphenol groups are connected or bonded to each other through a polyol ester of a fatty acid, exemplified by 1, 6-hexanediol-bis [3- (3 , 5-di-t-butyl-4-hydroxyphenyl)propionate], triethylene glycol-bis[3-(3-t-butyl-5-methyl-4-hydroxyphenyl)propionate] or pentaerythritol tetrakis[3-(3,5-di-t-butyl-4-hydroxyphenyl)propionate]; a bis to tetrakis(t-butylphenol) having a heterocyclic group and a $C_{2-10}$alkylenecarbonyloxy group, exemplified by 3,9-bis[2-{3-(3-t-butyl-4-hydroxy-5-methylphenyl)propionyloxy}-1,1-dimethylethyl]-2,4,8,10-tetraoxaspiro[5.5]undecane ;at-alkylphenol(e.g., t-butylphenol, and t-pentylphenol) having a $C_{3-10}$alkenylcarbonyloxy group, exemplified by 2-t-butyl-6-(3'-t-butyl-5'-methyl-2'-hydroxybenzyl)-4-methylphenylacrylate or 2-[1-(2-hydroxy-3,5-di-t-pentylphenyl)ethyl]-4,6-di-t-pentylphenylacrylate; a hindered phenol compound having a phosphonic ester group, exemplified by di-n-octadecyl-3,5-di-t-butyl-4-hydroxybenzylphosphonate; a hindered phenol compound having an amide unit, exemplified by N,N'-hexamethylenebis(3,5-di-t-butyl-4-hydroxydihydrocinnamamide), N,N'-ethylenebis[3-(3,5-di-t-butyl-4-hydroxyphenyl)propionamide], N,N'-tetramethylenebis[3-(3,5-di-t-butyl-4-hydroxyphenyl)propionamide], N,N'-hexamethylenebis[3-(3,5-di-t-butyl-4-hydroxyphenyl)propionamide], N,N'-ethylenebis[3-(3-t-butyl-5-methyl-4-hydroxyphenyl)propionamide], N,N'-hexamethylenebis[3-(3-t-butyl-5-methyl-4-hydroxyphenyl)propionamide], N,N'-bis[3-(3,5-di-t-butyl-4-hydroxyphenyl)propionyl]hydrazine, N,N'-bis[3-(3-t-butyl-5-methyl-4-hydroxyphenyl)propionyl]hydrazine, 1,3,5-tris(3,5-di-t-butyl-4-hydroxybenzyl)isocyanurate, or 1,3,5-tris(4-t-butyl-3-hydroxy-2,6-dimethylbenzyl)isocyanurate], and others. Among them, a phenol compound having at -butyl group (particularly, apluralityof t-butyl groups), inparticular, a compound having a plurality of t-butylphenol sites, is preferred. These hindered phenol compounds may be used singly or in combination.

The hindered amine compound may include a piperidine derivative having a steric hindrance group, for example, an ester group-containing piperidine derivative [for example, an aliphatic acyloxypiperidine (e.g., a $C_{2-20}$aliphatic acyloxy-tetramethylpiperidine) such as 4-acetoxy-2,2,6,6-tetramethylpiperidine, 4-stearoyloxy-2,2,6,6-tetramethylpiperidine or 4-acryloyloxy-2,2,6,6-tetramethylpiperidine;an aromatic acyloxypiperidine (e.g., a $C_{7-11}$aromatic acyloxy-tetramethyl-piperidine) such as 4-benzoyloxy-2,2,6,6-tetramethylpiperidine; an aliphatic di-or tricarboxylic acid-bis-ortrispiperidyl ester(e.g., a $C_{2-20}$aliphatic dicarboxylic acid-bispiperidylester) such as bis(2,2,6,6-tetramethyl-4-piperidyl)oxalate, bis(2,2,6,6-tetramethyl-4-piperidyl)malonate, bis(2,2,6,6-tetramethyl-4-piperidyl)adipate, bis(1,2,2,6,6-pentamethyl-4-piperidyl)adipate, bis(2,2,6,6-tetramethyl-4-piperidyl)sebacate, bis(1,2,2,6,6-pentamethyl-4-piperidyl)sebacate; an aromatic di- to tetracarboxylic acid-bis- to tetrakispiperidyl ester (e.g., an aromatic di- or tricarboxylic acid-bis- or trispiperidyl ester) such as bis(2,2,6,6-tetramethyl-4-piperidyl)terephthalate or tris(2,2,6,6-tetramethyl-4-piperidyl)benzene-1,3,5-tricarboxylate], an ether group-containing piperidine derivative [for example, a $C_{1-10}$alkoxypiperidine (e.g., a $C_{1-6}$alkoxy-tetramethylpiperidine) such as 4-methoxy-2,2,6,6-tetramethylpiperidine; a $C_{5-8}$cycloalkyloxy-piperidine such as 4-cyclohexyloxy-2,2,6,6-tetramethylpiperidine; an aryloxypiperidine such as 4-phenoxy-2,2,6,6-tetramethylpiperidine; a $C_{6-10}$aryl-$C_{1-4}$alkyloxy-piperidine such as 4-benzyloxy-2,2,6,6-tetramethylpiperidine; or an alkylenedioxybispiperidine (e.g., a $C_{1-10}$alkylenedioxy-bispiperidine) such as 1,2-bis(2,2,6,6-tetramethyl-4-piperidyloxy)ethane], an amide group-containing piperidine derivative [for example, a carbamoyloxypiperidine such as 4-(phenylcarbamoyloxy)-2,2,6,6-tetramethylpiperidine; an alkylenedioxy-bispiperidine substituted with a carbamoyloxy group, e.g., bis (2,2,6,6-tetramethyl-4-piperidyl)hexamethylene-1,6-dicarbamate]. Moreover, the hindered amine compound may also include, for example, a polycondensate of piperidine derivatives having a high molecular weight (e.g., a polycondensate of dimethyl succinate and 1-(2-hydroxyethyl)-4-hydroxy-2,2,6,6-tetramethylpiperidine, and a poly{6-[(1,1,3,3-tetramethylbutyl)imino-1,3,5-triazin-2,4-diyl][2-(2,2,6,6-tetramethylpiperidyl)amino]hexamethylene[4-(2,2,6,6-tetramethylpiperidyl)imino]}). These hindered amine compounds may be used singly or in combination.

These antioxidants may be used singly or in combination. The proportion of the antioxidant may be about 0.001 to 5 parts by weight, preferably about 0.005 to 3 parts by weight, and more preferably about 0.01 to 2 parts by weight, relative to 100 parts by weight of the polyacetal resin.

(Processing stabilizer)

The processing stabilizer may include at least one member selected from the group consisting of (a) a long-chain fatty acid or a derivative thereof, (b) a polyoxyalkylene glycol, (c) a silicone compound, and others.

(a) Long-chain or higher fatty acid or derivative thereof

The long-chain or higher fatty acid may be a saturated fatty acid or an unsaturated fatty acid. Moreover, part of hydrogen atoms in the higher fatty acid may be substituted with a substituent(s) such as hydroxyl group. Such a higher fatty acid may be exemplified by a mono- or di-fatty acid having not less than 10 carbon atoms, for example, a saturated mono-fatty acid having not less than 10 carbon atoms [e.g., a saturated $C_{10-34}$ fatty acid such as lauric acid, palmitic acid, stearic acid, behenic acid or montanic acid], an unsaturated mono-fatty acid having not less than 10 carbon atoms [e.g. , an unsaturated $C_{10-34}$ fatty acid such as oleic acid, linoleic acid or linolenic acid], a di-fatty acid having not less than 10 carbon atoms (a dibasic fatty acid) [e.g., a saturated $C_{10-30}$ di-fatty acid such as sebacic acid or dodecanedioic acid), and an unsaturated $C_{10-30}$ di-fatty acid such as decenedioic acid], and others. The fatty acid may also include one which has one or a plurality of hydroxyl group (s) in amolecular thereof (e.g., a hydroxy-saturated $C_{10-26}$ fatty acid such

as 12-hydroxy stearic acid). These fatty acids may be used singly or in combination.

The derivative of the higher fatty acidmay include, for example, a fatty acid ester, a fatty acid amide, and others. As to the fatty acid ester, there is no particular limitation on its structure, and an ester of either a straight or branched chain fatty acid can be used. As the higher fatty acid ester, there may be mentioned, for example, an ester of the above-mentioned higher fatty acid with an alcohol (e.g. , an ester having one or a plurality of ester bond(s), such as a monoester, a diester, a triester, or tetraester). The alcohol constituting the higher fatty acid ester is not particularly limited to a specific one. Such an alcohol may be a monohydric alcohol. As such an alcohol, a polyhydric alcohol is usually employed in many cases.

The polyhydric alcohol may include a polyhydric alcohol having about 2 to 8 carbon atoms or a polymer thereof, for example, a diol exemplified by an alkylene glycol (e.g. , ethylene glycol, diethylene glycol, and propylene glycol); a triol exemplified by glycerin, trimethylolpropane, or a derivative thereof; a tetraol exemplified by pentaerythritol, sorbitan, or a derivative thereof ; as well as a homo- or copolymer of the polyhydric alcohol (s) [e.g., a homo- or copolymer of a polyoxyalkylene glycol such as a polyethylene glycol or a polypropylene glycol, a polyglycerin, dipentaerythritol, and a polypentaerythritol]. The average degree of polymerization of the polyoxyalkylene glycol is not less than 2 (e.g., about 2 to 500), and preferably not less than 16 (e.g. , about 20 to 200). The alcohols may be used singly or in combination.

Examples of such an ester of a long-chain or higher fatty acid may include an ester of ethylene glycol (e.g., ethylene glycol mono- or dipalmitate, and a stearate, behenate, or montanate corresponding to the palmitate), an ester of glycerin (e.g. , glycerin mono- to tripalmitate, and a stearate, behenate, or montanate corresponding to the palmitate), an ester of pentaerythritol (e.g., pentaerythritol mono- to tetrapalmitate, and a stearate, behenate, or montanate corresponding to the palmitate), a polyglycerin tristearate, trimethylolpropane monopalmitate, pentaerythritol monoundecylate, sorbitan monostearate, a mono- or dilaurate of a polyalkylene glycol (such as a polyethylene glycol or a polypropylene glycol), and a palmitate, stearate, behenate, montanate, oleate or linolate corresponding to the laurate, and others.

Among these derivatives, as the fatty acid amide, for example, an acid amide (e.g., a monoamide and a bisamide) of the higher fatty acid (a higher mono- or di-fatty acid) with an amine (such as a monoamine, a diamine or a polyamine) may be used. Among the acid amides, a bisamide is particularly preferred.

As the monoamide, there may be mentioned, for example, a primary acid amide of a saturated fatty acid (such as lauric acid amide, palmitic acid amide or stearic acid amide); a primary acid amide of an unsaturated fatty acid (such as oleic acid amide); and a secondary acid amide of a saturated and/or an unsaturated fatty acid with a monoamine (such as stearyl stearic acid amide or stearyl oleic acid amide).

The bisamide may include a bisamide of the fatty acid with a $C_{1-6}$alkylenediamine. The concrete examples of the bisamide may include ethylenediamine-dipalmitic acid amide, ethylenediamine-distearic acid amide (ethylene bis-stearyl amide), hexamethylenediamine-distearic acid amide, and in addition, a behenic acid amide, montanic acid amide, oleic acid amide, or erucic acid amide corresponding to the these acid amides. Furthermore, as the bisamide, a bisamide in which different species of acyl groups are independently bonded to amine sites of an alkylenediamine, such as ethylenediamine-(stearic acid amide)oleic acid amide, may also be used. In the acid amide, it is preferred that the fatty acid constituting the acid amide is a saturated fatty acid.

These long-chain (or higher) fatty acid amides or derivatives thereof may be used singly or in combination.

(b) Polyoxyalkylene glycol

The polyoxyalkylene glycol may include a homo- or copolymer of an alkylene glycol [e.g., a $C_{2-6}$alkylene glycol such as ethylene glycol, propylene glycol, or tetramethylene glycol], and a derivative thereof.

Specific examples of the polyoxyalkylene glycol may include a poly$C_{2-4}$oxyalkylene glycol such as a polyethylene glycol, a polypropylene glycol or a polytetramethylene glycol, a copolymer such as a polyoxyethylene-polyoxypropylene copolymer (e.g., a random or block copolymer), a polyoxyethylene-polyoxypropylene glyceryl ether, or a polyoxyethylene-polyoxypropylene monobutyl ether, and others. Among them, the preferred one includes a polymer having an oxyethylene unit, for example, a polyethylene glycol, a polyoxyethylene-polyoxypropylene copolymer, and a derivative thereof.

The number average molecular weight of the polyoxyalkylene glycol is about $3 \times 10^2$ to $1 \times 10^6$ (e.g., about $5 \times 10^2$ to $5 \times 10^5$), and preferably about $1 \times 10^3$ to $1 \times 10^5$ (e.g., about $1 \times 10^3$ to $5 \times 10^4$). The polyoxyalkylene glycols may be used singly or in combination.

(c) Silicone compound

The silicone compound may include a (poly)organosiloxane, and others. Examples of the (poly)organosiloxane may include, a monoorganosiloxane such as a dialkylsiloxane (e.g., dimethylsiloxane), an alkylarylsiloxane (e.g., phenylmethylsiloxane) or a diarylsiloxane (e.g., diphenylsiloxane), a homopolymer thereof (for example, a polydimethylsiloxane, and a polymethylphenylsiloxane), or a copolymer thereof. Incidentally, the polyorganosiloxane may be an oligomer.

Moreover, the (poly)organosiloxane may include a modified (poly) organosiloxane (e.g., a modif ied silicone) having substituent(s) (such as an epoxy group, a hydroxyl group, an alkoxy group, a carboxyl group, an amino group or a substituted amino group (e.g., a dialkylamino group), an ether group, a vinyl group, or a (meth)acryloyl group) in the end or main chain of the molecule. These silicone compounds may be used singly or in combination.

The proportion of the processing stabilizer may be selected from, for example, about 0.001 to 10 parts by weight, preferably about 0.01 to 5 parts by weight, and more preferably about 0.03 to 3 parts by weight, relative to 100 parts by weight of the polyacetal resin. In particular, the proportion may be about 0.03 to 2 parts by weight.

(Heat stabilizer)

The heat stabilizer may include (a) a basic nitrogen-containing compound, (b) an organic carboxylic acid or a metal salt of an organic carboxylic acid, (c) an alkali or alkaline earth metal compound, (d) a hydrotalcite, (e) a zeolite, (f) a phosphine compound, and others.

(a) Basic nitrogen-containing compound

As the basic nitrogen-containing compound (or basic nitrogen compound), at least one member selected from the group consisting of a triazine compound, a guanidine compound, a urea compound, an amino acid compound, an amino alcohol compound, an imide compound, and an amide compound may be used.

The aminotriazine compound may include melamine or a derivative thereof [e.g., melamine, and a condensate of melamine (melam, melem, melon)], guanamine or a derivative thereof , and an aminotriazine resin [for example, a co-polycondensation.resin of melamine (e.g., a melamine-formaldehyde resin, a phenol-melamine resin, a melamine-phenol-formaldehyde resin, a benzoguanamine-melamine resin, and an aromatic polyamine-melamine resin), and a co-polycondensation resin of guanamine (e.g., a benzoguanamine-formaldehyde resin, and a benzoguanamine-phenol-formaldehyde resin)].

Among the aminotriazine compounds, the derivative of guanamine may include an aliphatic guanamine compound [for example, a monoguanamine (e.g., a $C_{1-24}$alkyl-substituted guanamine such as valeroguanamine or stearoguanamine), and an alkylenebisguanamine (e.g., a $C_{1-24}$alkylene-bisguanamine such as succinoguanamine or glutaroguanamine)], an alicyclic guanamine compound [for example, a monoguanamine (e.g., cyclohexanecarboguanamine, norbornenecarboguanamine, cyclohexenecarboguanamine, and norbornanecarboguanamine)], an aromatic guanamine compound [for example, a monoguanamine (e.g., benzoguanamine, a benzoguanamine having a substituent, e.g., toluguanamine, xyloguanamine, phenylbenzoguanamine, hydroxybenzoguanamine, 4-(4'-hydroxyphenyl)benzoguanamine, cyanobenzoguanamine, 3,5-dimethyl-4-hydroxybenzoguanamine, and 3,5-di-t-butyl-4-hydroxybenzoguanamine), α- or β-naphthoguanamine, a polyguanamine (e.g., phthaloguanamine, isophthaloguanamine, terephthaloguanamine, naphthalenediguanamine, and biphenylenediguanamine), and an aralkyl- or aralkyleneguanamine (e.g., phenylacetoguanamine, β-phenylpropioguanamine, and o-, m- or p-xylylenebisguanamine))], a hetero atom-containing guanamine compound [for example, an acetal group-containing guanamine (e.g., 2,4-diamino-6-(3,3-dimethoxypropyl-s-triazine), a dioxane ring-containing guanamine (e.g., [2-(4',6'-diamino-s-triazin-2'-yl)ethyl]-1,3-dioxane, [2-(4',6'-diamino-s-triazin-2'-yl)ethyl]-4-ethyl-4-hydroxymethyl-1,3-dioxane), a tetraoxospiro ring-containing guanamine (e.g., CTU-guanamine, and CMTU-guanamine), an isocyanuric ring-containing guanamine (e.g., 1,3,5-tris[2-(4',6'-diamino-s-triazin-2'-yl)ethyl]isocyanurate, and 1,3,5-tris[3-(4',6'-diamino-s-triazin-2'-yl)propyl]isocyanurate), an imidazole ring-containing guanamine (e.g., guanamine compounds described in Japanese Patent Application Laid-Open No. 41120/1972 (JP-47-41120A)), and guanamine compounds described in Japanese Patent Application Laid-Open No. 154181/2000 (JP-2000-154181A)). Moreover, the aminotriazine compound may also include, for example, a compound which has alkoxymethyl group(s) on amino group(s) of the melamine, melamine derivative or guanamine compound [e.g., a mono-to hexamethoxymethylmelamine, a mono- to tetramethoxymethylbenzoguanamine, and a mono to octamethoxymethyl-CTU-guanamine]. These guanamine compounds may have 1 to 5 substituent(s) exemplified in the paragraph of the carboxylic acid hydrazide.

The guanidine compound may include, for example, a non-cyclic guanidine (e.g., glycocyamine, guanolin, guanidine, and cyanoguanidine), a cyclic guanidine (e.g., a glycocyamidine compound such as glycocyamidine, or creatinine; and oxalylguanidine or a cyclic guanidine having a similar structure thereto, such as oxalylguanidine or 2,4-diiminoparabanic acid); an imino group-substituted urazole compound (e.g., iminourazole, and guanazine); an isocyanuric acid imide (e.g., isoammelide, and isoammeline); malonylguanidine, tartronylguanidine; mesoxalylguanidine; and others.

The urea compound may include, for example, a non-cyclic urea compound [for example, urea, an N-substituted urea having a substituent such as an alkyl group, a non-cyclic urea condensate (e.g., a polymer of urea, such as biuret, or biurea; and a condensate compound of urea and an aldehyde compound, such as methylenediurea or ureaform)], a cyclic urea compound [for example, a cyclic monoureide, e.g., an alkyleneurea (e.g., ethyleneurea, and crotonylideneurea), an aryleneurea (e.g., imesatin), a ureide of a dicarboxylic acid (e.g., parabanic acid, barbituric acid, isocyanuric acid, and uramil), a ureide of a β-aldehydic acid (e.g., uracil, thymine, and urazole), a ureide of an α-hydroxy acid (for example, a hydantoin compound, e.g., hydantoin; 5-methylhydantoin; 5-phenylhydantoin, 5-(o-, m-, or p-hydroxyphenyl) hydantoin, or 5-(o-, m-, or p-aminophenyl)hydantoin; 5-benzylhydantoin; 5,5-dimethylhydantoin; 5-methyl-5-phenylhydantoin; 5,5-diphenylhydantoin; 5,5-dibenzylhydantoin; pentamethylenebishydantoin; and allantoin or a metal salt thereof (e.g., an A1 salt such as allantoin dihydroxyaluminum salt)); a cyclic diureide, for example, uric acid, an alkyl-substituted uric acid, acetyleneurea (glycoluril) or a derivative thereof (e.g. a mono- to tetra($C_{1-4}$alkoxy$C_{1-4}$alkyl)glycoluril), crotylidenediurea, a diureide of an α-hydroxy acid (e.g., 1,1'-methylenebis(5,5-dimethylhydantoin)), a diurea such as p-urazine, and a diureide of a dicarboxylic acid (e.g. , alloxantin, and purpuric acid)].

Examples of the amino acid may include an α-amino acid [for example, a monoaminomonocarboxylic acid (e.g., glycine, alanine, leucine, isoleucine, phenylalanine, tyrosine, serine, proline, hydroxyproline, tryptophan, methionine, cysteine, α-aminobutyric acid, and hexahydropicolinic acid), a monoaminodicarboxylic acid (e.g., aspartic acid, glutamic acid, asparagine, glutamine, hexahydrodipicolinic acid, and hexahydroquinolinic acid), and a diaminomonocarboxylic acid (e.g., lysine, arginine, and histidine)], a β-amino acid (e.g., β-alanine, β-aminobutyric acid, and hexahydrocinchomeronic acid), a γ-amino acid (e.g., γ-aminobutyric acid), a δ-amino acid (e.g., δ-amino-n-valeric acid), and others. Incidentally, these amino acids may be in a D-, L-, or DL-form. The amino acid may also include an amino acid derivative in which a carboxyl group is subjected to metal salination (e.g., an alkali metal salt, an alkaline earth metal salt), amidation, hydrazidation, or esterification (e.g., methyl esterification, ethyl esterification).

The amino alcohol compound may include an amino$C_{1-10}$aliphatic mono- or polyol such as monoethanolamine, diethanolamine, 2-amino-1-butanol, 2-amino-2-methyl-1-propanol, 2-amino-2-methyl-1,3-propanediol, 2-amino-2-ethyl-1,3-propanediol, or tris(hydroxymethyl)aminomethane.

Examples of the imide compound may include an aromatic polycarboxylic acid imide such as phthalic acid imide, trimellitic acid imide, or pyromellitic acid imide, and others.

The amide compound may include, for example, an aliphatic carboxylic acid amide (e.g., malonamide, adipic acid amide, sebacic acid amide, and dodecanedioic acid amide), a cyclic carboxylic acid amide (e.g., ε-caprolactam), an aromatic carboxylic acid amide (e.g., benzoic acid amide, o-, m- or p-aminobenzamide, isophthalic acid diamide, and terephthalic acid amide), a polyamide-series resin [for example, a nylon 3 (a poly-β-alanine), a nylon 46, a nylon 6, a nylon 66, a nylon 11, a nylon 12, a nylon MXD6, a nylon 6-10, a nylon 6-11, a nylon 6-12, a nylon 6-66-610, and a nylon 9T], a polyester amide, a polyamide imide, a polyurethane, a homo- or copolymer of a poly(meth)acrylic acid amide which may be crosslinked [e.g., polymers described in US Patent No. 5011890], a homo- or copolymer of a poly(vinyllactam) [for example, a homo- or copolymer of a poly(N-vinylpyrrolidone) (e.g., homo- or copolymers described in Japanese Patent Application Laid-Open No. 52338/1980 (JP-55-52338A), and US Patent No. 3204014)], a poly(N-vinylcarboxylic acid amide), a copolymer of N-vinylcarboxylic acid amide and another vinyl monomer (e.g., homo-or copolymers described in Japanese Patent Application Laid-Open Nos. 247745/2001(JP-2001-247745A),131386/2001 (JP-2001-131386A), 311302/1996 (JP-8-311302A) and 86614/1984 (JP-59-86614A), US Patent Nos. 5455042, 5407996 and 5338815), and others.

(b) Organic carboxylic acid or metal salt of organic carboxylic acid

As the organic carboxylic acid, a carboxyl group-containing compound having a pKa of not less than 3.6 may be used. Such an organic carboxylic acid may include, for example, organic carboxylic acids described in Japanese Patent Application Laid-Open No. 239484/2000 (JP-2000-239484A).

The metal salt of the organic carboxylic acid may include, for example, a salt of an organic carboxylic acid with a metal (e.g., an alkali metal such as Li, Na or K; an alkaline earth metal such as Mg or Ca; and a transition metal such as Zn).

The organic carboxylic acid constituting the metal salt may be a compound of low molecular weight or a compound of high molecular weight. As the organic carboxylic acid, there may be used a saturated or unsaturated lower aliphatic carboxylic acid having less than 10 carbon atoms, and a polymer of an unsaturated aliphatic carboxylic acid, in addition to a saturated or unsaturated higher aliphatic carboxylic acid exemplified in paragraph of the higher fatty acid. Moreover, among these aliphatic carboxylic acids, a monocarboxylic acid may have a hydroxyl group. The saturated lower aliphatic carboxylic acid may include a saturated $C_{1-9}$monocarboxylic acid (e.g., acetic acid, propionic acid, butyric acid, isobutyric acid, valeric acid, isovaleric acid, pivalic acid, caproic acid, and caprylic acid) or a hydroxy acid thereof (e.g., glycolic acid, lactic acid, glyceric acid, and hydroxybutyric acid), and a saturated$C_{2-9}$dicarboxylic acid (e.g., oxalic acid, malonic acid, succinic acid, glutaric acid, adipic acid, pimelic acid, cork acid, and azelaic acid).

The unsaturated lower aliphatic carboxylic acid may include an unsaturated $C_{3-9}$monocarboxylic acid [e.g., (meth)acrylic acid, crotonic acid, and isocrotonic acid] or a hydroxy acid thereof, and an unsaturated $C_{4-9}$dicarboxylic acid (e.g., maleic acid, and fumaric acid).

Moreover, exemplified as the polymer of the unsaturated aliphatic carboxylic acid may be a copolymer of a polymerizable unsaturated carboxylic acid [for example, an $\alpha,\beta$-ethylene-type (ethylenic) unsaturated carboxylic acid, for example, a polymerizable unsaturated monocarboxylic acid (such as (meth)acrylic acid), a polymerizable unsaturated polycarboxylic acid (such as itaconic acid, maleic acid, or fumaric acid), an acid anhydride of the polycarboxylic acid, or a monoester of the polycarboxylic acid (e.g., a monoC$_{1-10}$alkyl ester of the polycarboxylic acid such as monoethyl maleate)] with an olefin (e.g., an $\alpha$-C$_{2-10}$olefin such as ethylene or propylene).

These organic carboxylic acids or these metal salts of the organic carboxylic acids may be used singly or in combination.

(c) Alkali or alkaline earth metal compound

The alkali or alkaline earth metal compound may include an inorganic compound exemplified by a metal oxide (such as CaO, or MgO), a metal hydroxide (such as LiOH, Ca(OH)$_2$, or Mg(OH)$_2$), and a salt of an inorganic acid with a metal [e.g., a salt of an inorganic acid (such as a salt of carbonic acid with a metal (such as Li$_2$CO$_3$, Na$_2$CO$_3$, K$_2$CO$_3$, CaCO$_3$ or MgCO$_3$), a borate, and a phosphate)]. Inparticular, the metal oxide and the metal hydroxide are preferred. Moreover, among the compounds, the alkaline earth metal compound is preferred.

These alkali or alkaline earth metal compounds may be used singly or in combination.

(d) Hydrotalcite

As the hydrotalcite, hydrotalcites recited in Japanese Patent Application Laid-Open No. 1241/1985 (JP-60-1241A) and Japanese Patent Application Laid-Open No. 59475/1997 (JP-9-59475A), such as hydrotalcite compounds represented by the following formula are usable.

$$[M^{2+}{}_{1-x}M^{3+}{}_x(OH)_2]^{x+}[A^{n-}{}_{x/n}\cdot mH_2O]^{x-}$$

In the formula, $M^{2+}$ represents $Mg^{2+}$, $Mn^{2+}$, $Fe^{2+}$, $Co2^+$, or any of other divalent metal ions; $M^{3+}$ represents $Al^{3+}$, $Fe^{3+}$, $Cr^{3+}$, or any of other trivalent metal ions; $A^{n-}$ represents $CO_3{}^{2-}$, $OH^-$, $HPO_4{}^{2-}$, $SO_4{}^{2-}$, or any of other n-valent anions (particularly, monovalent or divalent anion); x is $0 < x < 0.5$; and m is $0 \leq m < 1$.

These hydrotalcites may be used singly or in combination.

Incidentally, the hydrotalcite is available from Kyowa Chemical Industry Co., Ltd. under the trade names "DHT-4A", "DHT-4A-2", or "Alcamizer".

(e) Zeolite

The zeolite is not particularly limited to a specific one, and a zeolite other than H-type zeolite can be employed, for example, a zeolite recited in Japanese Patent Application Laid-Open No. 62142/1995 (JP-7-62142A) [zeolites the smallest unit cell of which is a crystalline aluminosilicate with an alkaline and/or alkaline earth metal (A-, X-, Y-, L-, and ZSM-type zeolites, mordenite-type zeolite; chabazite, mordenite, faujasite, and other natural zeolites)].

These zeolites may be used singly or in combination.

(f) Phosphine compound

Examples of the phosphine compound may include a phosphine compound such as an alkylphosphine (for example, a tri-straight or branched chain C$_{1-10}$alkylphosphine such astriethylphosphine),a cycloalkylphosphine(for example, a triC$_{5-12}$cycloalkylphosphine such as tricyclohexylphosphine), an arylphosphine (for example, a triC$_{6-12}$arylphosphine which may have a substituent (such as an amino group or a C$_{1-4}$alkyl group), such as triphenylphosphine, p-tolyldiphenylphosphine, di-p-tolylphenylphosphine, tri-m-aminophenylphosphine, tri(2,4-dimethylphenyl) phosphine, tri(2,4,6-trimethylphenyl)phosphine, or tri(o-, m- or p-tolyl)phosphine), an aralkylphosphine (for example, a tri(C$_{6-12}$arylC$_{1-4}$alkyl)phosphine such as tri(o-, m- or p-anisylphosphine), an arylalkenylphosphine (for example, a mono- or diC$_{6-12}$aryl-di-or monoC$_{2-10}$alkenylphosphine such as diphenylvinylphosphine, or allyldiphenylphosphine), an arylaralkylphosphine (for example, a mono- or diC$_{6-12}$aryl-di- or mono(C$_{6-12}$arylC$_{1-4}$alkyl)phosphine such as p-anisyldiphenylphosphine, or di(p-anisyl)phenylphosphine; and a C$_{6-12}$aryl-(C$_{6-12}$ary1C$_{1-4}$alkyl)phosphine which may have a substituent (such as a C$_{1-10}$alkyl group), such as methylphenyl-p-anisylphosphine), or a bisphosphine compound [for example, a bis(diC$_{6-12}$arylphosphino)C$_{1-10}$alkane such as 1,4-bis(diphenylphosphino)butane], and others. These phosphine compounds may be used singly or in combination.

These heat stabilizers may be used singly or in combination. In particular, in the case of using the basic nitrogen-containing compound in combination with at least one member selected from the group consisting of the metal salt of the organic carboxylic acid, the alkali or alkaline earth metal compound, the hydrotalcite, the zeolite, and the phosphine compound, heat stability can be also imparted to the resin composition at a smaller amount of the heat stabilizer.

In the case where the resin composition contains the heat stabilizer, the proportion of the heat stabilizer may be, for example, selected from the range of about 0.001 to 10 parts by weight, and preferably about 0.001 to 5 parts by weight, and more preferably about 0.005 to 3 parts by weight (particularly about 0.01 to 2 parts by weight), relative to 100 parts by weight of the polyacetal resin.

(Weather (light)-resistant stabilizer)

The weather (light)-resistant stabilizer may include (a) a benzotriazole compound, (b) a benzophenone compound, (c) an aromatic benzoate compound, (d) a cyanoacrylate compound, (e) an oxalic anilide compound, (f) a hydroxyaryl-1,3,5-triazine compound, and (g) a hindered amine compound, and others.

(a) Benzotriazole compound

Examples of the benzotriazole compound may include a benzotriazole compound having an aryl group substituted with a hydroxyl group and a $C_{1-6}$alkyl group, such as 2-(2'-hydroxy-5'-methylphenyl)benzotriazole, 2-(2'-hydroxy-3',5'-di(t-butyl)phenyl)benzotriazole, 2-(2'-hydroxy-3',5'-di(t-amyl)phenyl)benzotriazole or 2-(2'-hydroxy-3',5'-di-isoamylphenyl)benzotriazole; a benzotriazole compound having an aryl group substituted with a hydroxyl group and an aralkyl (or aryl) group, such as 2-[2'-hydroxy-3',5'-bis($\alpha,\alpha$-dimethylbenzyl)phenyl]benzotriazole; a benzotriazole compound having an aryl group substituted with a hydroxyl group and an alkoxy (e.g., a $C_{1-12}$alkoxy) group, such as 2-(2'-hydroxy-4'-octoxyphenyl)benzotriazole; and others.

Among these benzotriazole compounds, the particularly preferred one includes a benzotriazole compound having a $C_{6-10}$aryl (particularly, phenyl) group substituted with a hydroxyl group and a $C_{3-6}$alkyl group, as well as a benzotriazole compound having an aryl group substituted with a hydroxyl group and a $C_{6-10}$aryl-$C_{1-6}$alkyl (particularly, phenyl-$C_{1-4}$alkyl) group.

(b) Benzophenone compound

Exemplified as the benzophenone compound may be a benzophenone compound having a plurality of hydroxyl groups (e.g., a di- to tetrahydroxybenzophenone such as 2,4-dihydroxybenzophenone; a benzophenone compound having a hydroxyl group, and an aryl or aralkyl group substituted with a hydroxyl group, such as 2-hydroxy-4-oxybenzylbenzophenone); a benzophenone compound having a hydroxyl group and an alkoxy (e.g., $C_{1-16}$alkoxy) group (e.g., 2-hydroxy-4-methoxybenzophenone, 2-hydroxy-4-octoxybenzophenone, 2-hydroxy-4-dodecyloxybenzophenone, 2,2'-dihydroxy-4-methoxybenzophenone, 2,2'-dihydroxy-4,4'-dimethoxybenzophenone, and 2-hydroxy-4-methoxy-5-sulfobenzophenone); and others.

Among these benzophenone compounds, the benzophenone compound preferably includes a benzophenone compound having a hydroxyl group, and a $C_{6-10}$aryl (or $C_{6-10}$aryl-$C_{1-4}$alkyl) group substituted with a hydroxyl group, particularly one having a hydroxyl group, and a phenyl-$C_{1-4}$alkyl group substituted with a hydroxyl group.

(c) Aromatic benzoate compound

The aromatic benzoate compound may include an alkylarylsalicylate such as p-t-butylphenylsalicylate or p-octylphenylsalicylate (particularly, an alkylphenylsalicylate).

(d) Cyanoacrylate compound

Exemplified as the cyanoacrylate compound may be a cyano group-containing diarylacrylate such as 2-ethylhexyl-2-cyano-3,3-diphenylacrylate or ethyl-2-cyano-3,3-diphenylacrylate(particularly, a cyano group-containing diphenylacrylate).

(e) Oxalic anilide compound

The oxalic anilide compound may include, for example, an oxalic diamide compound having an aryl group (such as phenyl group) on a nitrogen atom in which the aryl group may have a substituent(s), exemplified by N-(2-ethylphenyl)-N'-(2-ethoxy-5-t-butylphenyl)oxalic diamide, and N-(2-ethylphenyl)-N'-(2-ethoxy-phenyl)oxalic diamide.

(f) Hydroxyaryl-1,3,5-triazine compound

Examples of the hydroxyaryl-1,3,5-triazine compound may include a 2,4-diC$_{6-10}$aryl-6-(mono- or dihydroxyC$_{6-10}$aryl)-1,3,5-triazine [for example, a 2,4-diC$_{6-10}$aryl-6-(mono- or dihydroxyC$_{6-10}$aryl)-1,3,5-triazine which may have a substituent (s) (such as a C$_{1-10}$alkyl group, a C$_{1-18}$alkoxy group, a C$_{1-10}$alkoxyC$_{1-10}$alkoxy group, a C$_{6-10}$aryloxy group, or a C$_{6-10}$arylC$_{1-6}$alkoxy group) on an aryl group thereof, e.g., a hydroxyaryltriazine such as 2,4-diphenyl-6-(2-hydroxyphenyl)-1,3,5-triazine, or 2,4-diphenyl-6-(2,4-dihydroxyphenyl)-1,3,5-triazine; a hydroxyalkoxyaryltriazine such as 2,4-diphenyl-6-(2-hydroxy-4-methoxyphenyl)-1,3,5-triazine, 2,4-diphenyl-6-(2-hydroxy-4-ethoxyphenyl)-1,3,5-triazine, 2,4-diphenyl-6-(2-hydroxy-4-propoxyphenyl)-1,3,5-triazine, 2,4-diphenyl-6-(2-hydroxy-4-butoxyphenyl)-1,3,5-triazine, 2,4-diphenyl-6-(2-hydroxy-4-hexyloxyphenyl)-1,3,5-triazine, 2,4-diphenyl-6-(2-hydroxy-4-octyloxyphenyl)-1,3,5-triazine, 2,4-diphenyl-6-(2-hydroxy-4-dodecyloxyphenyl)-1,3,5-triazine, or a 2,4-di(p-tolyl or 2',4'-dimethylphenyl)-6-(2-hydroxy-C$_{1-16}$alkoxyphenyl)-1,3,5-triazine corresponding to each of these 2,4-diphenyl-6-(2-hydroxy-alkoxyphenyl)-1,3,5-triazines; a hydroxyaralkyloxyaryltriazine such as 2,4-diphenyl-6-(2-hydroxy-4-benzyloxyphenyl)-1,3,5-triazine, or 2,4-di(p-tolyl or 2',4'-dimethylphenyl)-6-(2-hydroxy-4-benzyloxyphenyl)-1,3,5-triazine; a hydroxyalkoxyalkoxyaryltriazine such as 2,4-diphenyl-6-(2-hydroxy-4-(2-butoxyethoxy)phenyl)-1, 3,5-triazine, or 2,4-di-p-tolyl-6-(2-hydroxy-4-(2-hexyloxyethoxy)phenyl)-1,3,5-triazine; and others. Among these compounds, one in which the aryl group is phenyl group, that is, the hydroxyphenyl-1,3,5-triazine compound, is preferred.

(g) Hindered amine compound

As the hindered amine compound, the hindered amine compounds as exemplified in the paragraph of the above-mentioned antioxidant may be used.

These weather (light)-resistant stabilizers may be used singly. Moreover, the same or different species of the weather (light)-resistant stabilizers may be used in combination.

Incidentally, it is preferred to use the hindered amine compound (g) in combination with other weather (light)-resistant stabilizer. In particular, it is preferred to use the benzotriazole compound (a) in combination with the hindered amine compound (g). The proportion (weight ratio) of the hindered amine compound (g) relative to other weather (light)-resistant stabilizer(s) (particularly, the benzotriazole compound) [the hindered amine compound/other weather (light)-resistant stabilizer(s)] may be, for example, about 0/100 to 80/20, preferably about 10/90 to 70/30, and more preferably about 20/80 to 60/40.

The proportion of the weather (light)-resistant stabilizer is, for example, about 0 to 5 parts by weight (e.g., about 0.01 to 5 parts by weight), preferably about 0.1 to 4 parts by weight, and more preferably about 0.1 to 2 parts by weight, relative to 100 parts by weight of the polyacetal resin.

(Coloring agent)

As the coloring agent, various dyes or pigments may be used. As the dye, a solvent dye is preferred, and includes, for example, an azo-series dye, an anthraquinone-series dye, a phthalocyanine-series dye or a naphthoquinone-series dye. The pigment may be an inorganic pigment or an organic pigment.

Exemplified as the inorganic pigment may be a titanium-series (titanium-containing) pigment, a zinc-series (zinc-containing) pigment, a carbon black (e.g., a furnace black, a channel black, an acetylene black, and Ketjen black), an iron-series (iron-containing) pigment, a molybdenum-series (molybdenum-containing) pigment, a cadmium-series (cadmium-containing) pigment, a lead-series (lead-containing) pigment, a cobalt-series (cobalt-containing) pigment, and an aluminum-series (aluminum-containing) pigment.

The organic pigment may include an azo-series pigment, an anthraquinone-series pigment, a phthalocyanine-series pigment, a quinacridone-series pigment, a perylene-series pigment, a perinone-series pigment, an isoindoline-series pigment, a dioxazine-series pigment, or a threne-series pigment.

The coloring agent may be used singly, or a plurality of these coloring agents may be used in combination. The use of a coloring agent having a high light-shielding effect [such as a carbon black, a titanium white (a titanium oxide), a phthalocyanine-series pigment, a perylene-series pigment (particularly a carbon black, a perylene-series black pigment)] ensures improvement in weather (light)-resistance of the polyacetal resin composition.

The content of the coloring agent is, for example, about 0 to 5 parts by weight (e.g., about 0.01 to 5 parts by weight), preferably about 0.1 to 4 parts by weight, and more preferably about 0.1 to 2 parts by weight, relative to 100 parts by weight of the polyacetal resin.

To the polyacetal resin composition of the present invention may be optionally added a conventional additive (s) singly or in combination. The additive may include, for example, an antioxidant (e.g., a phosphorus-containing, a sulfur-containing, a hydroquinone-series, and a quinoline-series antioxidant), a specific carboxylic acid (e.g., carboxylic acids described in Japanese Patent Application Laid-Open No. 239484/2000 (JP-2000-239484A)), an impact resistance improver [e.g., at least one member selected from the group consisting of an acrylic core-shell polymer, a thermoplastic polyurethane-series resin, a styrenic elastomer, and a thermoplastic polyester-series elastomer], a gloss control agent [e.g. , at least one member selected from the group consisting of an acrylic resin (a homo- or copolymer of a $C_{1-10}$alkyl (meth)acrylate, e.g., a poly(methyl methacrylate)), and a styrenic resin (e.g., a homo- or copolymer of styrene)], a sliding improver [e. g., at least one member selected from the group consisting of an olefinic polymer, a silicone-series resin, and a fluorine-containing resin], a mold-release agent (releasing agent), a nucleating agent, an antistatic agent, a flame retardant, a foaming agent (or a blowing agent), a surfactant, an antibacterial agent, an antifungal agent, an aromatic agent, a perfume, various polymers [e.g., a polycarbonate-series resin, a polyolefinic elastomer or resin, a polyvinyl alcohol-series resin, and an aliphatic polyester-series resin (e.g., a poly(L-lactic acid), a poly(D-lactic acid), a poly(D/L-lactic acid), a polyglycolic acid, and a copolymer of glycolic acid and lactic acid (e. g., D-, L- or D/L-lactic acid))], a filler, and others.

Moreover, if necessary, the resin composition may be further blended with one or combination of a conventional filler (such as a fibrous, plate-like or particulate filler) to improve properties of the molded product of the present invention. Examples of the fibrous filler may include an inorganic fiber (e.g., a glass fiber, a carbon fiber, a boron fiber, and a potassium titanate fiber (whisker)), an organic fiber (e.g., an amide fiber), and others. As the plate-like filler, there may be mentioned a glass flake, a mica, a graphite, a variety of metal foil, and others. Examples of the particulate filler may include a metal oxide (e.g., zinc oxide, and alumina), a sulfate (e.g., calcium sulfate, and magnesium sulfate), a carbonate (e.g., calcium carbonate), a glass (e.g., a milled fiber, a glass bead, and a glass balloon), a silicate (e.g., a talc, a kaolin, a silica, a diatomite, a clay, and a wollastonite), a sulfide (e.g., molybdenum disulfide, and tungsten disulfide), a carbide (e.g., graphite fluoride, and silicon carbide), boron nitride, and others.

(Production process of polyacetal resin composition)

The polyacetal resin composition of the present invention may be a particulate mixture or a molten mixture, and the polyacetal resin composition can be prepared by mixing a polyacetal resin with the aldehyde-inhibiting composition, and if necessary, other additive(s) [e.g., a stabilizer (an antioxidant, a processing stabilizer, a heat stabilizer, and a weather (light)-resistant stabilizer), an impact resistance improver, a gloss control agent, a sliding improver, a coloring agent and/or a filler], in a conventional manner. The aldehyde-inhibiting composition in which a carboxylic acid hydrazide are mixed with a metal salt of a hydroxy polycarboxylic acid in advance may be mixed with other components (a polyacetal resin, and if necessary other additive(s)), or a carboxylic acid hydrazide and/or a metal salt of a hydroxy polycarboxylic acid are separately mixed with other components.

As the production process of the polyacetal resin composition, there may be utilized, for example, (1) a process comprising feeding all components through a main feed port, kneading and extruding the resulting mixture into pellets with an extruder (e.g., a uniaxial or biaxial extruder), and molding a product from the pellets, (2) a process comprising feeding component (s) (e.g., a metal salt of a hydroxy polycarboxylic acid, a polyacetal resin, and the above-mentioned other additive(s)) free from the carboxylic acid hydrazide in the aldehyde-inhibiting composition through a main feed port, feeding component (s) containing at least the carboxylic acid hydrazide (as other component(s), there may be mentioned a polyacetal resin, the above-mentioned other additive(s), or the like) through a side feed port, kneading and extruding the resulting mixture into pellets with an extruder, and molding a product from the pellets, (3) a process comprising feeding component(s) containing part of the aldehyde-inhibiting composition (as other component(s), a polyacetal resin, other additive(s), or the like) through a main feed port and feeding component(s) containing the residual aldehyde-inhibiting composition (as other component(s), a polyacetal resin, other additive(s), or others) through a side feed port, kneading and extruding the fed components by using an extruder to prepare pellets, and molding a product from the pellets; (4) once making pellets (master batch) different in formulation, mixing (diluting) the pellets in a certain ratio, and molding a product having a certain formulation from the resulting pellets, or (5) a process comprising allowing the aldehyde-inhibiting composition to coexist with or adhere to a pelletized polyacetal resin by, for example , sprayingorcoating (e.g., surface-coating), and molding a product having a certain formulation from the resulting pellets.

Among these processes, the processes (1), (2) and (3) are preferred. In particular, it is preferred to melt-mix components by a uniaxial or biaxial extruder having exhaust (or degas) vent port (s) of not less than 1. Moreover, the carboxylic acid hydrazide may be side-fed through either of a feed port of the upstream or downstream of an exhaust vent port. Further, in the extruding and preparing step, the amount of formaldehyde emitted from the obtained molded product (shaped or molded article) can be further reduced by a preparation method comprising preblending a processing auxiliary such as water and/or an alcohol (e.g., methanol, ethanol, isopropyl alcohol, and n-propyl alcohol) or infusing the processing auxiliary through a feed port of the upstream of an exhaust vent port, and exhausting and removing volatile component (s) containing water and/or the alcohol from the exhaust vent port. The amount of water and/or the alcohol to be added as such a processing auxiliary is not particularly limited to a specific one. The amount of water and/or the alcohol may be usually selected from the range of about 0 to 20 parts by weight relative to 100 parts by weight of the polyacetal resin, and may be preferably about 0.01 to 10 parts by weight and more preferably 0.1 to 5 parts by weight relative to 100 parts by weight of the polyacetal resin.

Moreover, in particular, in the case of melt-mixing the polyacetal resin and the aldehyde-inhibiting composition by using an extruder, the carboxylic acid hydrazide constituting the aldehyde-inhibiting composition has a high formaldehyde-trapping rate, meanwhile limits a trapping amount of formaldehyde. Therefore, the preferably used method is an extruding and preparing method comprising side-feeding part or all of at least the carboxylic acid hydrazide constituting the aldehyde-inhibiting composition through a side feed port of the extruder, and/or an extruding and preparing method comprising setting up a melt-kneading or melt-mixing time (average residence time of the components) in the extruder as a short time, e.g., not longer than 300 seconds (e.g., about 5 to 300 seconds), preferably not longer than 250 seconds (e.g., about 10 to 250 seconds), more preferably not longer than 200 seconds (e.g. , about 10 to 200 seconds), and particularly about 10 to 150 seconds.

Incidentally, in the preparation of a composition for use in a molded product, mixing of a powdered (particulate) polyacetal resin as a substrate (e.g., a powder (particulate) obtained by grinding or pulverizing part or all of the polyacetal resin) with other components (e.g., the aldehyde-inhibiting composition, other additive(s) (e.g., a stabilizer, an impact resistance improver, a gloss control agent, a sliding improver, a coloring agent and/or a filler) followed by melt-kneading improves the degree of dispersion of the additives and therefore is advantageous.

The polyacetal resin composition of the present invention realizes that the emission of formaldehyde due to oxidation or thermal decomposition or the like of the polyacetal resin is remarkably supressed or inhibited and the working environment is accordingly improved or ameliorated particularly in the molding and processing (particularly, a melt-molding and processing) step. Moreover, the aldehyde-inhibiting composition can prevent the resin or the resin composition from discoloration due to the carboxylic acid hydrazide upon an extruding process, or a molding process.

(Molded product)

The present invention also includes a molded product (shaped or molded article) formed from the resin composition. The molded product of the present invention contains the polyacetal resin and the aldehyde-inhibiting composition in combination, and has excellent stability in an extrusion and/or molding process with having extremely small amount of emission (or generation) of formaldehyde. In other words, molded products from the conventional polyacetal resins containing antioxidants and other stabilizers liberate relatively large amounts of formaldehyde, cause corrosion and discoloration, as well as pollute the living and working environments. For example, the formaldehyde emission from commercially-available ordinary polyacetal resin products is about 2 to 5 $\mu$g per 1 cm$^2$ of surface area under dry conditions (in a constant-temperature dry atmosphere) and/or about 3 to 6 $\mu$g per 1 cm$^2$ of surface area under humid conditions (in a constant-temperature moisture-laden atmosphere).

On the other hand, in the polyacetal resin molded product of the present invention, the amount of formaldehyde emission from the molded product can be effectively reduced to the level unreached previously, by a smaller amount of the aldehyde-inhibiting composition comprising a carboxylic acid hydrazide and a metal salt of a hydroxy polycarboxylic acid, than the single use of the carboxylic acid hydrazide. Concretely, the amount of the formaldehyde emission is not more than 1.5 $\mu$g per 1 cm$^2$ of surface area of the molded product under dry conditions, preferably about 0 to 1.0 $\mu$g, more preferably about 0 to 0.6 $\mu$g, and usually about 0.001 to 1.0 $\mu$g, and further, about 0 to 0.1 $\mu$g is also achievable. Moreover, in humid conditions, the formaldehyde emission is not more than 2.5 $\mu$g (e.g. , about 0 to 2 $\mu$g) per 1 cm$^2$ of surface area of the molded product, preferably about 0 to 1.2 $\mu$g, more preferably about 0 to 0.4 $\mu$g, and further, about 0 to 0.2 $\mu$g is also achievable. The amount in humid conditions may be usually about 0.001 to 1.2 $\mu$g.

The molded product of the present invention may show the above-mentioned formaldehyde emission under either dry conditions or humid conditions. In particular, the molded product shows the above formaldehyde emission level under both dry and humid conditions in many cases. Therefore, the molded product of the present invention can be used as a material which can be adapted to more severe environment.

Incidentally, the formaldehyde emission under dry conditions can be determined as follows.

After the molded product of polyacetal resin is cut if necessary and its surface area is measured, a suitable portion of the article (e.g., the amount equivalent to a surface area of about 10 to 50 cm$^2$) is placed in a sealable vessel (20 mL capacity) to seal and stand (or maintained) at a temperature of 80°C for 24 hours. Then, this sealed vessel is charged with 5 mL of water and the formaldehyde in the aqueous solution is assayed in accordance with JIS (Japanese Industrial Standards) K0102,29 (under the heading of Formaldehyde) to calculate the formaldehyde emission per unit surface area of the molded product ($\mu$g/cm$^2$).

Moreover, the formaldehyde emission under humid conditions can be determined as follows.

After the molded product of a polyacetal resin is cut if necessary and its surface area is measured, a suitable portion of the molded product (e.g. , the amount equivalent to a surface area of about 10 to 100 cm$^2$) is suspended from the lid of a sealable vessel (1L capacity) containing 50 mL of distilled water. After seal of the vessel, the vessel is allowed to stand (or maintained) in a constant temperature oven at 60°C for 3 hours. Thereafter, the vessel is allowed to stand at a room temperature for 1 hour and the formaldehyde in the aqueous solution in the vessel is assayed in accordance with JIS K0102, 29 (under the heading of Formaldehyde) to calculate the formaldehyde emission per unit surface area of the article ($\mu$g/cm$^2$).

According to the present invention, the above quantitative definition on formaldehyde emission is adaptable as far as a polyacetal resin composition comprises the polyacetal resin and the aldehyde-inhibiting composition, that is, the definition is adaptable not only for molded products from polyacetal resin compositions comprising the conventional additive(s) (e.g., a conventional stabilizer, and a mold-release agent), but also for molded products from comparable resin compositions containing an inorganic filler and/or other polymers, even if only a major part of the surface of the molded product (for example, 50 to 100% of the total surface area) is constituted by the polyacetal resin (for example, a multi-colored article or a coated article).

INDUSTRIAL APPLICABILITY

The aldehyde inhibitor of the present invention is useful for application used close on the aldehyde-generating source, for example, a packaging material or a packing material (e.g. , a paper, a bag, and a container), a building material (e.g., a wall paper, and a blockboard), a filter (e.g., a filter made from a nonwoven fabric), or a particulate molded product such as a resin pellet. Moreover, the polyacetal resin composition is useful for molding various molded products by a conventional molding (or shaping) method (for example, injection molding, extrusion molding, compression molding, blow molding, vacuum molding, foam molding, rotation molding, and gas injection molding).

Moreover, the molded product (shaped or molded article) of the present invention finds application in any field of use where formaldehyde is objectionable (e.g., knob and lever as bicycle parts) and can also be used advantageously as parts and members in a variety of fields inclusive of automotive parts, electrical and electronic component (driving component and driven component) parts, architectural members and pipeline installation parts, household (for daily use) and cosmetic product parts, and medical device (for diagnostic or therapeutic use) parts.

More specifically, the automotive parts may include car interior parts such as inner handle, fuel trunk opener, seat belt buckle, assist lap, various switches, knob, lever, and clip; electrical system parts such as meters and connectors; in-vehicle electrical and electronic parts or mountings related to audio equipment and car navigation equipment, parts in contact with metals, typically the window regulator carrier plate, mechanical parts such as door lock actuator parts, mirror parts, wiper motor system parts, and fuel system parts.

The electrical or electronic component parts (the mechanical parts) may include, for example, parts or members constituted with molded products of polyacetal resin and fitted with a number of metal contacts [e.g. audio equipment such as cassette tape recorder, video equipment such as video tape recorder (VTR), 8 mm or other video camera, etc., office automation (OA) equipment such as copying machines, facsimile, word processor, computer, toys actuated by the driving force of an electric motor or a spring, a telephone, a keyboard as an accessory to a computer or the like]. To be specific, there can be mentioned chassis (base), gear, lever, cam, pulley, and bearing. Furthermore, the electrical or electronic component parts are applicable to optical and magnetic recording medium parts at least partly made of molded polyacetal resin (e.g. metal thin-film magnetic tape cassette, magnetic disk cartridge, opticomagnetic disc cartridge,etc.) and more particularly, the metal tape cassette for music, digital audio tape cassette, 8 mm video tape cassette, floppy (registered trademark) disk cartridge, minidisk cartridge, etc. As specific optical and magnetic medium parts, there can be mentioned tape cassette parts (tape cassette body, reel, hub, guide, roller, stopper, lid, etc.) and disk cartridge parts (disk cartridge body (case), shutter, cramping plate, etc.).

In addition, the molded product of a polyacetal resin according to the present invention can be used with advantage in architectural members and pipeline parts such as lighting equipment parts, interior architectural members (such as fittings, fixtures, furnishings), piping, cock, faucet, rest room (lavatory) -related parts, etc., a broad range of products related to daily living, cosmetic products, and medical devices, for example fastener (such as slide fastener, snap fastener, hoop-and-loop fastener, rail fastener), stationery, chapstick or lipstick cases, washer (or washing machine), water cleaner, spray nozzle, spray device or container, aerosol container, general vessels, and syringe holder.

EXAMPLES

The following examples are intended to describe this invention in further detail and should by no means be interpreted as defining the scope of the invention.

Incidentally, referring to the examples and comparative examples, the processing stability (discoloration degree of molded products), and the amount of formaldehyde emission from the molded (or shaped) articles under dry and humid conditions were evaluated based on the following methods.

[Processing stability (hue of molded product)]

A pellet formed from a polyacetal resin composition was molded by using an injection molding machine to obtain a specific-shaped plate-like molded product (100 mm x 40 mm x 2 mm), and the discoloration (hue) of the molded product was visually evaluated.

[Amount of formaldehyde emission from molded product in humid conditions, and the bleeding property]

Two plate test pieces (one piece: 100 mm x 40 mm x 2 mm; total surface area of 85.6 $cm^2$) were suspended from a lid of a polyethylene bottle (capacity 1 L) containing 50 ml of distilled water. The bottle was sealed to stand in a constant temperature oven at 60°C for 3 hours, followed by standing for 1 hour at a room temperature. The formaldehyde content of the aqueous solution in the bottle was determined in accordance with JIS K0102, 29 (under the heading of Formaldehyde) and the formaldehyde gas emission per surface area of the article ($\mu$g/$cm^2$) was calculated.

Further, the surface of the plate test piece (molded product) after the test was visually observed, and the degree of the bleeding was evaluated based on the following criteria.

"A": No bleeding was observed.
"B": Slight bleeding was observed.
"C": Extremely heavy bleeding was observed.

[Amount of formaldehyde emission from molded product in dry conditions]

Each resin sample consisting of 10 test pieces (one test piece: 2 mm x 2 mm x 50 mm; total surface area: about 40 $cm^2$) was placed in a vessel (capacity 20 mL) to seal and heated in a constant temperature oven at 80°C for 24 hours. After air-cooling to room temperature, 5 mL of distilled water was injected into the vessel using a syringe. The formaldehyde content of this aqueous solution was determined in accordance with JIS K0102, 29 (under the heading of Formaldehyde) and the formaldehyde gas emission per surface area ($\mu$g/$cm^2$) was calculated.

Examples 1 to 3 and 5 to 18

To 100 parts by weight of a polyacetal resin copolymer, were preblended (or premixed) a carboxylic acid hydrazide, a metal salt of a hydroxy polycarboxylic acid, an antioxidant, a processing stabilizer, a heat stabilizer, a coloring agent, and a weather (light)-resistant stabilizer in the proportions indicated in Table 1. Concerning each of thus obtained mixtures, the mixture was supplied to a biaxial extruder (30 mm diameter) having one pressure-reducing vent port through a main feed port thereof, and melt-mixed to prepare a pelletized composition (extrusion condition: L/D=35, extrusion temperature=200°C, screw rotation frequency=100 rpm, vent vacuum=70 cmHg (93.1 kPa), discharging rate=15 kg/hr, and average residence time=100 seconds). From thus obtained pellets, prescribed test pieces were fabricated with an injection molding machine, and concerning each test piece, the processing stability (discoloration degree of molded products), and the amount of formaldehyde emission from the test piece were evaluated. The results are shown in Tables 1 and 2.

Example 4

To 95 parts by weight of a polyacetal resin copolymer, were preblended (or premixed) a metal salt of a hydroxy polycarboxylic acid, an antioxidant, and a processing stabilizer in the proportion indicated in Table 1. Thus obtained mixture was supplied to a biaxial extruder (30 mm diameter) having one pressure-reducing vent port through a main feed port thereof, Moreover, 5 parts by weight of the polyacetal copolymer and 0.1 part by weight of a carboxylic acid hydrazide were supplied to the biaxial extruder through a side feed port thereof. The components were meld-mixed in the extruder, and a pelletized composition was prepared. From thus obtained pellets, prescribed test pieces were molded with an injection molding machine. With respect to each test piece, the processing stability (discoloration degree of molded products: hue), and the amount of formaldehyde emission from the test piece were evaluated. The results are shown in Table 1.

Comparative Examples 1 to 5

Incidentally, for comparison, a sample prepared without any carboxylic acid hydrazide (Comparative Example 1), a sample prepared without any metal salts of a hydroxy polycarboxylic acid (Comparative Example 2), a sample with addition of an aliphatic carboxylic acid hydrazide and a metal salt of a monocarboxylic acid (Comparative Example 3), samples with addition of an aromatic carboxylic acid hydrazide and a metal salt of a monocarboxylic acid (Comparative Examples 4 and 5) were evaluated in the same manner as the above. The results are shown in Table 3.

Table 1

## Table 1

| | Examples | | | | | | | | | | | |
| --- | --- | --- | --- | --- | --- | --- | --- | --- | --- | --- | --- | --- |
| | 1 | 2 | 3 | 4 | 5 | 6 | 7 | 8 | 9 | 10 | 11 | 12 |
| Polyacetal resin copolymer "a" (parts by weight) | a-1 100 | a-1 100 | a-2 100 | a-1 100 | a-1 100 | a-1 100 | a-1 100 | a-1 100 | a-1 100 | a-1 100 | a-1 100 | a-1 100 |
| Carboxylic acid hydrazide "b" (parts by weight) | b-1 0.3 | b-1 0.3 | b-1 0.2 | b-1 0.1 | b-2 0.2 | b-3 0.2 | b-4 0.3 | b-5 0.3 | b-6 0.5 | b-1 0.2 | b-1 0.2 | b-2 0.2 |
| Metal salt of (hydroxy poly)carboxylic acid "c" (parts by weight) | c-1 0.03 | c-1 0.03 | c-1 0.03 | c-1 0.03 | c-1 0.03 | c-1 0.03 | c-1 0.03 | c-1 0.03 | c-1 0.03 | c-1 0.03 | c-2 0.03 | c-1 0.03 |
| Antioxidant "d" (parts by weight) | — | d-1 0.3 | d-1 0.3 | d-1 0.3 | d-1 0.3 | d-2 0.3 | d-3 0.3 | d-1 0.3 | d-1 0.3 | d-1 0.3 | d-1 0.3 | d-1 0.3 |
| Processing stabilizer "e" (parts by weight) | — | e-1 0.2 | e-1 0.2 | e-1 0.2 | e-1 0.2 | e-2 0.2 | e-3 0.2 | e-1 0.2 | e-1 0.2 | e-4 0.2 | e-4 0.2 | e-4 0.2 |
| Heat stabilizer "f" (parts by weight) | — | — | — | — | — | — | — | — | — | — | — | — |
| Coloring agent "g" (parts by weight) | — | — | — | — | — | — | — | — | — | — | — | — |
| Weather (light)-resistant stabilizer "h" (parts by weight) | — | — | — | — | — | — | — | — | — | — | — | — |
| Processing stability (Hue of the molded product) | white | white | white | white | white | white | white | white | white | white | white | white |
| Amount of formaldehyde emission, Humid ($\mu$g/cm$^2$) | 0.05 | 0.03 | 0.03 | 0.02 | 0.03 | 0.04 | 0.05 | 0.06 | 0.20 | 0.04 | 0.05 | 0.06 |
| Amount of formaldehyde emission, Dry ($\mu$g/cm$^2$) | — | 0.02 | — | — | — | — | — | — | — | — | — | — |

EP 1 683 838 A1

[Table 2]

Table 2

| | Examples | | | | | |
|---|---|---|---|---|---|---|
| | 13 | 14 | 15 | 16 | 17 | 18 |
| Polyacetal resin copolymer "a" (parts by weight) | a-1 100 | a-1 100 | a-1 100 | a-1 100 | a-1 100 | a-1 100 |
| Carboxylic acid hydrazide "b" (parts by weight) | b-1 0.05 | b-1 0.05 | b-1 0.10 | b-1 0.3 | b-1 0.3 | b-5 0.3 |
| Metal salt of (hydroxy poly) carboxylic acid "c" (parts by weight) | c-1 0.03 | c-1 0.03 | c-1 0.03 | c-1 0.03 | c-1 0.1 | c-1 0.1 |
| Antioxidant "d" (parts by weight) | d-1 0.3 | d-1 0.3 | d-1 0.3 | d-1 0.3 | d-1 0.03 | d-1 0.03 |
| Processing stabilizer "e" (parts by weight) | e-1 0.2 | e-1 0.2 | e-1 0.2 | e-1 0.2 | e-1 0.1 | e-1 0.1 |
| Heat stabilizer "f" (parts by weight) | f-1 0.01 | f-2 0.03 | f-3 0.03 | - | - | - |
| Coloring agent "g" (parts by weight) | - | - | - | g-1 0.5 | - | - |
| Weather (light)-resistant stabilizer "h" (parts by weight) | - | - | - | - | h-1 0.4    h-2 0.2 | h-1 0.4    h-2 0.2 |
| Processing stability (Hue of the molded product) | white | white | white | black | white | white |
| Amount of formaldehyde emission, Humid ($\mu$g/cm$^2$) | 0.05 | 0.06 | 0.02 | 0.11 | 0.20 | 0.19 |
| Amount of formaldehyde emission, Dry ($\mu$g/cm$^2$) | - | - | - | - | - | - |

[Table 3]

Table 3

| | Comparative Examples | | | | |
|---|---|---|---|---|---|
| | 1 | 2 | 3 | 4 | 5 |
| Polyacetal resin copolymer "a" (parts by weight) | a-1 100 | a-1 100 | a-1 100 | a-1 100 | a-1 100 |
| Carboxylic acid hydrazide "b" (parts by weight) | - | b-3 0.1 | b-3 0.1 | b-4 0.3 | b-5 0.3 |
| Metal salt of (hydroxy poly)carboxylic acid "c" (parts by weight) | c-1 0.03 | _ | c-3 0.03 | c-4 0.03 | c-5 0.03 |
| Antioxidant "d" (parts by weight) | d-1 0.3 | d-1 0.3 | d-1 0.3 | d-1 0.3 | d-1 0.3 |
| Processing stabilizer "e" (parts by weight) | e-1 0.2 | e-1 0.2 | e-1 0.2 | e-1 0.2 | e-1 0.2 |
| Heat stabilizer "f" (parts by weight) | - | - | - | - | - |
| Coloring agent "g" (parts by weight) | - | - | - | - | - |
| Weather (light)-resistant stabilizer "h" (parts by weight) | - | - | - | - | - |
| Processing stability (Hue of the molded product) | white | white | ash gray | yellow | yellow yellow |

(continued)

| | Comparative Examples | | | | |
|---|---|---|---|---|---|
| | 1 | 2 | 3 | 4 | 5 |
| Amount of formaldehyde emission, Humid ($\mu$g/cm$^2$) | 4.10 | 0.30 | 0.30 | 0.05 | 0.06 |
| Amount of formaldehyde emission, Dry ($\mu$g/cm$^2$) | 1.60 | 0.17 | - | - | - |

As shown in Tables, the amount of formaldehyde emission (generation) was considerably small in the resin composition in Examples as compared with one in Comparative Examples, due to the synergetic effect of combination of a carboxylic acid hydrazide with a hydroxy polycarboxylic acid hydrazide. Accordingly, the working and using environments can be remarkably improved. Further, even in the case of using an aromatic carboxylic acid hydrazide, the resin compositions excellent in processing stability and the molded products free from discoloration can be obtained.

Example 19

The pellet of the polyacetal resin composition obtained in Example 2 was supplied to a biaxial extruder (30 mm diameter) having one vent port through a main feed port thereof, and the melt-mixing operation was repeated again to prepare a palletized composition at a total residence time of 200 seconds (extrusion condition: L/D=35, extrusion temperature=200°C, screw rotation frequency=100 rpm, vent vacuum=70 cmHg (93.1 kPa), and discharging rate=15 kg/hr). With the use of the resulting pellet, a prescribed test piece was formed by an injection molding machine, and the hue of the test piece and the amount of formaldehyde emission from the test piece were evaluated. As the result, the hue of the molded product was white, and the amounts of formaldehyde emission were 0. 08 $\mu$g/cm$^2$ under dry condition, and 0.14 $\mu$g/cm$^2$ under humid condition.

Example 20

One hundred (100) parts by weight of the pellet of the polyacetal resin composition obtained in Comparative Example 1 (free from carboxylic acid hydrazides), 0.1 part by weight of a carboxylic acid hydrazide (b-1), and 0.01 part by weight of a metal salt of a hydroxy polycarboxylic acid (c-1) were put in a polyethylene bag, and blended to give a pellet composition in which the carboxylic acid hydrazide and the metal salt of the hydroxy polycarboxylic acid were mixed. From the pellet composition, the prescribed test piece was fabricated with an injection molding machine, and the hue of the test piece and the amount of formaldehyde emission from the test piece were evaluated. As a result, the hue of the molded product was white, and the amounts of formaldehyde emission were 0.02 $\mu$g/cm$^2$ under dry condition, and 0.05 $\mu$g/cm$^2$ under humid condition.

The polyacetal copolymers, the carboxylic acid hydrazide compounds, the (hydroxy poly)carboxylic acid metal salts, the antioxidants, the processing stabilizers, the heat stabilizers, the coloring agents and the weather (light)-resistant stabilizers used in the Examples and Comparative Examples are shown as follows.

1. Polyacetal copolymer "a"

(a-1): Polyacetal copolymer (melt index of 9 g/10 min.)
(a-2): Polyacetal copolymer (melt index of 27 g/10 min.)

Incidentally, the melt index was a value (g/10 min.) determined under conditions of 190°C and 2169 g, based on ASTM-D1238.

2. Carboxylic acid hydrazide "b"

(b-1): Dodecanedioic acid dihydrazide
(b-2): Sebacic acid dihydrazide
(b-3): Adipic acid dihydrazide
(b-4): Isophthalic acid dihydrazide
(b-5): 2,6-Naphthalenedicarboxylic acid dihydrazide
(b-6): Polyacrylic acid hydrazide [Aminopolyacrylamide

"APA" (the average molecular weight of 10000) manufactured by Otsuka Chemical Co., Ltd.]
3. Metal salt of (hydroxy poly) carboxylic acid "c"

(c-1): Tricalcium citrate tetrahydrate
(c-2): Trimagnesium citrate nonahydrate
(c-3): Calcium stearate
(c-4): Magnesium stearate
(c-5): Calcium acetate

4. Antioxidant "d"

(d-1): Triethylene glycol bis[3-(3-t-butyl-5-methyl-4-hydroxyphenyl)propionate]
(d-2): Pentaerythritol tetrakis[3-(3,5-di-t-butyl-4-hydroxyphenyl)propionate]
(d-3): 2,2'-Methylenebis(-4-methyl-6-t-butylphenol)

5. Processing stabilizer "e"

(e-1): Ethylenebisstearylamide
(e-2): Polyethylene oxide [molecular weight: 35000]
(e-3) : Montanate [manufactured by Toyo-Petrolite Co. , Ltd. , "LUZAWAX-EP"]
(e-4): Glycerin monostearate

6. Heat stabilizer (alkaline earth metal salt, basic nitrogen-containing compound) "f"

(f-1): Magnesium oxide
(f-2): Biurea
(f-3) : Nylon 6-66-610 [manufactured by DuPont, "Elvamide 8063R"]

7. Coloring agent "g"

(g-1): Carbon black (acetylene black) 8. Weather (light)-resistant stabilizer "h"
(h-1): 2-[2'-Hydroxy-3',5'-bis($\alpha,\alpha$-dimethylbenzyl) phenyl]benzotriazole
(h-2): Bis(2,2,6,6-tetramethyl-4-piperidyl)sebacate

## Claims

1. An aldehyde-inhibiting composition which inhibits an aldehyde from an aldehyde-generating source, and comprises a carboxylic acid hydrazide and a metal salt of a hydroxy polycarboxylic acid.

2. An aldehyde-inhibiting composition according to claim 1, wherein the metal salt of the hydroxy polycarboxylic acid comprises a salt of a hydroxy aliphatic polycarboxylic acid with at least one metal selected from the group consisting of an alkali metal, an alkaline earth metal, a metal of Group 3A, a metal of Group 4A, a metal of Group 5A, a metal of Group 6A, a metal of Group 7A, a metal of Group 8, a metal of Group 1B, a metal of Group 2B, a metal of Group 3B, and a metal of Group 4B of Periodic Table of the Elements.

3. An aldehyde-inhibiting composition according to claim 1, wherein the carboxylic acid hydrazide comprises at least one member selected from the group consisting of an aliphatic carboxylic acid hydrazide, an alicyclic carboxylic acid hydrazide, an aromatic carboxylic acid hydrazide and a dimer or trimer acid hydrazide, and the metal salt of the hydroxy polycarboxylic acid comprises a salt of a hydroxy $C_{3-22}$ aliphatic di- to tetracarboxylic acid with an alkaline earth metal.

4. An aldehyde-inhibiting composition according to claim 1, wherein the metal salt of the hydroxy polycarboxylic acid comprises a salt of citric acid, malic acid, or tartaric acid with an alkaline earth metal.

5. An aldehyde-inhibiting composition according to claim 1, wherein the metal salt of the hydroxy polycarboxylic acid is a hydrate salt.

**6.** An aldehyde-inhibiting composition according to claim 1, wherein the metal salt of the hydroxy polycarboxylic acid comprises a calcium citrate or a magnesium citrate.

**7.** An aldehyde-inhibiting composition according to claim 1, wherein the proportion of the metal salt of the hydroxy polycarboxylic acid is 0.01 to 100 parts by weight relative to 1 part by weight of the carboxylic acid hydrazide.

**8.** An aldehyde-inhibiting composition according to claim 1, which further comprises at least one member selected from the group consisting of an adsorbent and a resin.

**9.** An aldehyde-inhibiting composition according to claim 1, which comprises an aldehyde-inhibiting component at least containing the carboxylic acid hydrazide and the metal salt of the hydroxy polycarboxylic acid, and the inhibiting component is held or supported on a substrate.

**10.** A polyacetal resin composition which comprises a polyacetal resin and an aldehyde-inhibiting composition, wherein the aldehyde-inhibiting composition inhibits an aldehyde from an aldehyde-generating source and comprises a carboxylic acid hydrazide and a metal salt of a hydroxy polycarboxylic acid.

**11.** A polyacetal resin composition according to claim 10, wherein the proportion of the aldehyde-inhibiting composition is 0.001 to 20 parts by weight relative to 100 parts by weight of the polyacetal resin.

**12.** A polyacetal resin composition according to claim 10, which further comprises at least one member selected from the group consisting of an antioxidant, a heat stabilizer, a processing stabilizer, a weather (light)-resistant stabilizer, an impact resistance improver, a gloss control agent, a sliding improver, a coloring agent, and a filler.

**13.** A polyacetal resin composition according to claim 12, wherein the antioxidant comprises at least one member selected from the group consisting of a hindered phenol compound and a hindered amine compound.

**14.** A polyacetal resin composition according to claim 12, wherein the processing stabilizer comprises at least one member selected from the group consisting of a higher fatty acid or a derivative thereof, a polyoxyalkylene glycol, and a silicone compound.

**15.** A polyacetal resin composition according to claim 12, wherein the heat stabilizer comprises at least one member selected from the group consisting of a basic nitrogen-containing compound, a phosphine compound, an organic carboxylic acid or a metal salt of an organic carboxylic acid, an alkali or alkaline earth metal compound, a hydrotalcite, and a zeolite.

**16.** A polyacetal resin composition according to claim 12, wherein the heat stabilizer comprises at least one member selected from the group consisting of an alkaline earth metal salt of a monocarboxylic acid, and an alkaline earth metal oxide.

**17.** A polyacetal resin composition according to claim 12, wherein the weather (light)-resistant stabilizer comprises at least one member selected from the group consisting of a benzotriazole compound, a benzophenone compound, an aromatic benzoate compound, a cyanoacrylate compound, an oxalic anilide compound, a hydroxyaryl-1, 3 , 5-triazine compound, and a hindered amine compound.

**18.** A polyacetal resin composition according to claim 12, wherein the impact resistance improver comprises at least one member selected from the group consisting of an acrylic core-shell polymer, a thermoplastic polyurethane-series resin, a styrenic elastomer, and a thermoplastic polyester-series elastomer.

**19.** A polyacetal resin composition according to claim 12, wherein the gloss control agent comprises at least one member selected from the group consisting to an acrylic resin and a styrenic resin.

**20.** A polyacetal resin composition according to claim 12, wherein the sliding improver comprises at least one member selected from the group consisting of an olefinic polymer, asilicone-series resin, and a fluorine-containing resin.

**21.** A polyacetal resin composition according to claim 10, which comprises a pellet of the polyacetal resin which is at least coexistent with the aldehyde-inhibiting composition or a master batch containing the aldehyde-inhibiting composition.

**22.** A process for producing a polyacetal resin composition, which comprises melt-mixing a polyacetal resin and an aldehyde-inhibiting composition recited in claim 1 with an extruder, wherein at least a carboxylic acid hydrazide is fed to the extruder through a side feed port and mixed with the polyacetal resin.

**23.** A process for producing a polyacetal resin composition, which comprises melt-mixing a polyacetal resin and an aldehyde-inhibiting composition recited in claim 1 with an extruder, wherein the average retention time in the extruder is not longer than 300 seconds.

**24.** A molded product formed from a polyacetal resin composition comprising a polyacetal resin and an aldehyde-inhibiting composition which inhibits an aldehyde generation from an aldehyde-generating source and comprises a carboxylic acid hydrazide and a metal salt of a hydroxy polycarboxylic acid.

**25.** A molded product according to claim 24, wherein (1) when the molded product is stored in a closed space for 24 hours at a temperature of 80°C, the emission of formaldehyde therefrom is not more than 1.0 $\mu$g per 1 $cm^2$ of the surface area of the product, and/or (2) when the molded product is stored in a closed space for 3 hours at a temperature of 60°C under a saturated humidity, the emission of formaldehyde therefrom is not more than 1.2 $\mu$g per 1 $cm^2$ of the surface area of the product.

**26.** A molded product according to claim 24, which is an automotive part, an electric or electronic device part, an architectural or pipeline part, a household utensil or cosmetic article part, or a medical device part.

<div align="center">

**INTERNATIONAL SEARCH REPORT**

</div>

| | International application No. |
|---|---|
| | PCT/JP2004/015699 |

**A. CLASSIFICATION OF SUBJECT MATTER**
Int.Cl⁷ C08L59/00, C08K5/25, C08K5/092, A61L9/01, B01J20/22//C09K3/00

According to International Patent Classification (IPC) or to both national classification and IPC

**B. FIELDS SEARCHED**

Minimum documentation searched (classification system followed by classification symbols)
Int.Cl⁷ C08L59/00, C08K5/25, C08K5/092

Documentation searched other than minimum documentation to the extent that such documents are included in the fields searched

Electronic data base consulted during the international search (name of data base and, where practicable, search terms used)
WPI (L)

**C. DOCUMENTS CONSIDERED TO BE RELEVANT**

| Category* | Citation of document, with indication, where appropriate, of the relevant passages | Relevant to claim No. |
|---|---|---|
| X | JP 2000-26705 A (Polyplastics Co., Ltd.), 25 January, 2000 (25.01.00), | 1-3,5,7-19, 21-26 |
| Y | Claims; Par. Nos. [0071], [0076], [0084], [0096]; tables 1, 2 (Family: none) | 4,6,20 |
| X | JP 2000-26704 A (Polyplastics Co., Ltd.), 25 January, 2000 (25.01.00), | 1-3,5,7-19, 21-26 |
| Y | Claims; Par. Nos. [0058], [0062], [0068] to [0070]; tables 1, 2 (Family: none) | 4,6,20 |
| X | JP 10-298401 A (Sanyo Chemical Industries, Ltd.), | 1-3,5,7-19, 21-26 |
| Y | 10 November, 1998 (10.11.98), Claims; Par. Nos. [0007] to [0014] (Family: none) | 4,6,20 |

| [X] Further documents are listed in the continuation of Box C. | [ ] See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search 22 February, 2005 (22.02.05) | Date of mailing of the international search report 05 April, 2005 (05.04.05) |
|---|---|
| Name and mailing address of the ISA/ Japanese Patent Office | Authorized officer |
| Facsimile No. | Telephone No. |

Form PCT/ISA/210 (second sheet) (January 2004)

## INTERNATIONAL SEARCH REPORT

| International application No. |
|---|
| PCT/JP2004/015699 |

C (Continuation).   DOCUMENTS CONSIDERED TO BE RELEVANT

| Category* | Citation of document, with indication, where appropriate, of the relevant passages | Relevant to claim No. |
|---|---|---|
| Y | US 2003/0162912 A1  (Stefan Disch, Kurt Witan, Ernst Hofmann, Klaus Kurz), 28 August, 2003 (28.08.03), Claims; Par. Nos. [0006], [0062]; tables 1, 2 & US 2003/0195280 A1    & WO 02/26884 A1 & WO 02/26885 A1          & JP 2004-510024 A | 4,6,20 |

Form PCT/ISA/210 (continuation of second sheet) (January 2004)